(19)

**Europäisches Patentamt**
**European Patent Office**
**Office européen des brevets**

(11) **EP 4 590 027 A1**

(12) **EUROPEAN PATENT APPLICATION**
published in accordance with Art. 153(4) EPC

(43) Date of publication:
**23.07.2025 Bulletin 2025/30**

(21) Application number: **23886226.2**

(22) Date of filing: **31.10.2023**

(51) International Patent Classification (IPC):
*H04W 40/32* $^{(2009.01)}$    *H04W 48/16* $^{(2009.01)}$
*H04W 84/12* $^{(2009.01)}$    *H04W 84/18* $^{(2009.01)}$

(52) Cooperative Patent Classification (CPC):
**H04W 40/32; H04W 48/16; H04W 84/12;**
**H04W 84/18**

(86) International application number:
**PCT/KR2023/017161**

(87) International publication number:
**WO 2024/096530 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **03.11.2022  KR 20220145041**
               **21.11.2022  KR 20220156464**

(71) Applicant: **Samsung Electronics Co., Ltd.**
**Suwon-si, Gyeonggi-do 16677 (KR)**

(72) Inventors:
• **KIM, Junsung**
  **Suwon-si, Gyeonggi-do 16677 (KR)**
• **JUNG, Buseop**
  **Suwon-si, Gyeonggi-do 16677 (KR)**

(74) Representative: **Appleyard Lees IP LLP**
**15 Clare Road**
**Halifax HX1 2HY (GB)**

(54) **ELECTRONIC DEVICE FOR MERGING CLUSTERS OF NAN COMMUNICATION AND OPERATION METHOD THEREOF**

(57)    Various embodiments of the present invention relate to a device and a method for merging NAN clusters by an electronic device. The electronic device may comprise a communication circuit and a processor, wherein the processor: forms a first NAN cluster with a first external electronic device; on the basis of discovery of a second NAN cluster, updates a first cluster grade of the first NAN cluster on the basis of a second merging reference value of the second NAN cluster and a first merging reference value of the first NAN cluster; and identifies the direction of merging the first NAN cluster and the second NAN cluster on the basis of the first merging reference value, the second merging reference value, the updated first cluster grade, and/or a second cluster grade of the second NAN cluster. Other embodiments may also be possible.

FIG. 7

700

START

FORM FIRST NAN CLUSTER — 701

IDENTIFY FIRST MERGING CRITERION VALUE
AND FIRST CLUSTER GRADE
OF FIRST NAN CLUSTER — 703

DETECT SECOND NAN CLUSTER — 705

IDENTIFY SECOND MERGING CRITERION VALUE
AND SECOND CLUSTER GRADE
OF SECOND NAN CLUSTER — 707

IDENTIFY MERGING DIRECTION OF CLUSTER — 709

PERFORM MERGING OF CLUSTER BASED
ON MERGING DIRECTION OF CLUSTER — 711

END

# Description

[Technical Field]

Various embodiments of the present invention relate to an electronic device for merging clusters in neighbor awareness networking (NAN) communication, and an operation method thereof.

[Background Art]

Due to the development of information and communication technology and semiconductor technology, various electronic devices are being used. Electronic devices can provide various types of proximity services utilizing low-power discovery technology. Proximity services may refer to communication functions that enable nearby electronic devices to quickly exchange data through a proximity network. For example, proximity services may include low-power proximity services using Bluetooth low energy (BLE) beacons, or low-power proximity services based on low-power short-range communication technologies (e.g., neighbor awareness networking (NAN) and/or Wi-Fi aware (hereinafter referred to as "NAN")) based on wireless local area networks (WLANs).

NAN-based low-power proximity services can represent a communication function that exchanges data by forming a proximity network that dynamically changes according to the movement of electronic devices. Electronic devices included in a cluster may transmit and/or receive signals for discovery (e.g., beacons) and/or service discovery frames (SDFs) to notify the existence of the cluster or for synchronization within a time duration (or a communication period) (e.g., a discovery window (DW)) that is synchronized with each other. For example, a cluster may represent a set of electronic devices forming a proximity network.

[Disclosure of Invention]

[Technical Problem]

A NAN cluster can be merged with another NAN cluster into one NAN cluster when an electronic device included in the NAN cluster discovers the existence of the other NAN cluster. The merging of NAN clusters can be merged into a NAN cluster with a relatively large cluster grade (CG). For example, an electronic device included in a first NAN cluster may be merged into a second NAN cluster based on the discovery of the second NAN cluster having a relatively large cluster grade (CG). For example, the cluster grade of a NAN cluster may be configured based on a master preference (MP) and/or a time synchronization function (TSF) of an anchor master device included in the NAN cluster.

Since the merging of NAN clusters is performed based on the cluster grade, the number of electronic devices included in the NAN cluster (e.g., the size of the NAN cluster) and/or the number of NAN data paths (NDPs) or NAN data links (NDLs) activated for data communication within the NAN cluster may not be considered. Since NAN cluster merging is performed based on the cluster grade, electronic devices included in a first NAN cluster with a relatively low cluster grade can be merged into a second NAN cluster with a relatively high cluster grade. When the number of electronic devices included in the first NAN cluster is greater than the number of electronic devices included in the second NAN cluster, a relatively large number of electronic devices included in the first NAN cluster can be merged into the second NAN cluster.

When the relatively large number of electronic devices included in the first NAN cluster are merged into the second NAN cluster, from a network perspective, based on the increase in the number of electronic devices performing merging into the second NAN cluster, the number of failures (or errors) of data transmission due to merging of NAN clusters may increase and/or the power consumption due to merging of NAN clusters may increase.

Various embodiments of the present invention disclose a device and method for controlling merging of NAN clusters in an electronic device.

The technical problem to be achieved in this document is not limited to the technical problem mentioned above, and other technical problems not mentioned can be clearly understood by a person having ordinary skill in the art to which the present invention belongs from the description below.

[Solution to Problem]

According to various embodiments, an electronic device may include a communication circuit, and a processor operatively connected to the communication circuit. According to one embodiment, the processor may form a first neighbor awareness network (NAN) cluster with at least one first external electronic device. According to one embodiment, the processor may identify a second merging criterion value and second cluster grade of a second NAN cluster that is different from the first NAN cluster, based on the discovery of the second NAN cluster. According to one embodiment, the processor may update a first cluster grade of the first NAN cluster based on the second merging criterion value and a first merging criterion value of the first NAN cluster. According to one embodiment, the processor may identify a merging direction of the first NAN cluster and the second NAN cluster based on the first merging criterion value, the second merging criterion value, the updated first cluster grade, and/or the second cluster grade.

According to various embodiments, an operation method of an electronic device may include forming a first NAN cluster with at least one first external electronic device. According to one embodiment, the operation method of the electronic device may include identifying a second merging criterion value and second cluster grade of a second NAN cluster that is different from the first NAN cluster, based on the discovery of the second NAN cluster. According to one embodiment, the operation method of the electronic device may include updating a first cluster grade of the first NAN cluster based on the second merging criterion value and a first merging criterion value of the first NAN cluster. According to one embodiment, the operation method of the electronic device may include identifying the direction of merging the first NAN cluster and the second NAN cluster based on the first merging criterion value, the second merging criterion value, the updated first cluster grade, and/or the second cluster grade.

According to various embodiments, a non-transitory computer-readable storage medium (or a computer program product) storing one or more programs may be described. According to one embodiment, the one or more programs may include instructions that, when executed by a processor of an electronic device, perform operations of forming a first NAN cluster with at least one first external electronic device, identifying a second merging criterion value and second cluster grade of a second NAN cluster that is different from the first NAN cluster, based on the discovery of the second NAN cluster, updating a first cluster grade of the first NAN cluster based on the second merging criterion value and a first merging criterion value of the first NAN cluster, and identifying the direction of merging the first NAN cluster and the second NAN cluster based on the first merging criterion value, the second merging criterion value, the updated first cluster grade, and/or the second cluster grade.

[Advantageous Effects of Invention]

According to various embodiments of the present invention, an electronic device may configure a merging direction with another NAN cluster based on a merging criterion value configured based on the number of electronic devices included in a NAN cluster (e.g., the size of the NAN cluster) and/or the number of NAN data paths (NDPs) or NAN data links (NDLs) activated for data communication within the NAN cluster, thereby reducing the probability of failure (or error) and/or power consumption of data transmission due to merging of NAN clusters, and reducing the time required for merging NAN clusters.

The effects that can be obtained from various embodiments of the present invention are not limited to the effects mentioned above, and other effects that are not mentioned can be clearly understood by those skilled in the art in which various embodiments of the present invention belong from the description below.

[Brief Description of Drawings]

FIG. 1 is a block diagram illustrating an electronic device in a network environment according to various embodiments.
FIG. 2 is a diagram illustrating a NAN cluster according to various embodiments.
FIG. 3 is a diagram illustrating a protocol for transmitting signals of an electronic device included in a NAN cluster according to various embodiments.
FIG. 4 is a diagram illustrating an example of data transmission and/or reception within a NAN cluster according to various embodiments.
FIG. 5A is a diagram illustrating a first NAN cluster and a second NAN cluster according to various embodiments.
FIG. 5B is a diagram illustrating an example of merging a first NAN cluster and a second NAN cluster according to various embodiments.
FIG. 6 is a block diagram illustrating an electronic device for merging NAN clusters according to various embodiments.
FIG. 7 is a flowchart for merging NAN clusters in an electronic device according to various embodiments.
FIG. 8 is a flowchart for configuring a merging direction of NAN clusters in an electronic device according to various embodiments.
FIG. 9 is a diagram illustrating an example for merging NAN clusters in an electronic device according to various embodiments.
FIG. 10A is a diagram illustrating an example for sharing a merging criterion value in an electronic device according to various embodiments.
FIG. 10B is a diagram illustrating an example for sharing a merge reference value in an electronic device according to various embodiments.
FIG. 10C is a diagram illustrating an example for sharing a merge reference value in an electronic device according to various embodiments.

[Mode for the Invention]

Hereinafter, various examples are described in detail with reference to the accompanying drawings.

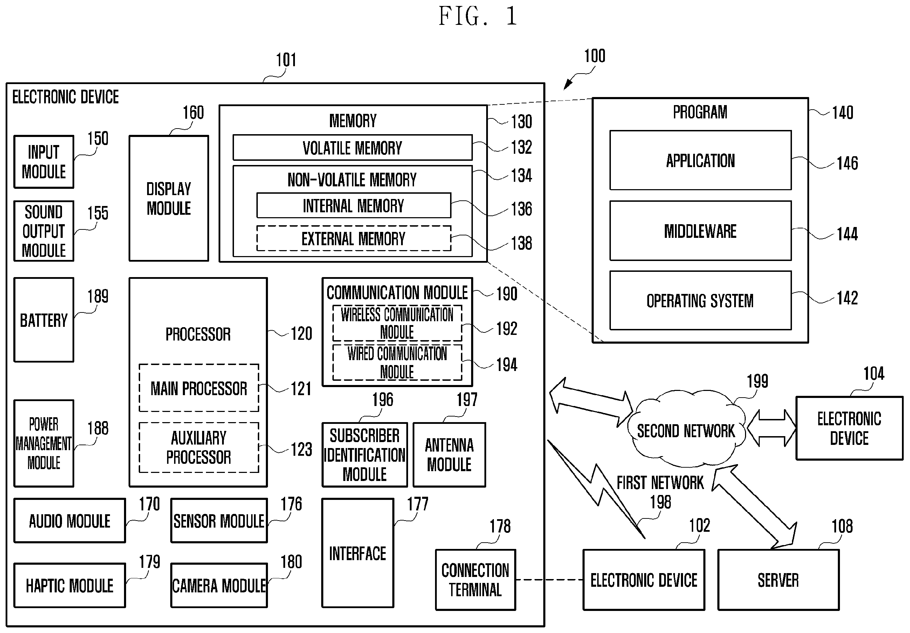

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to, " "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

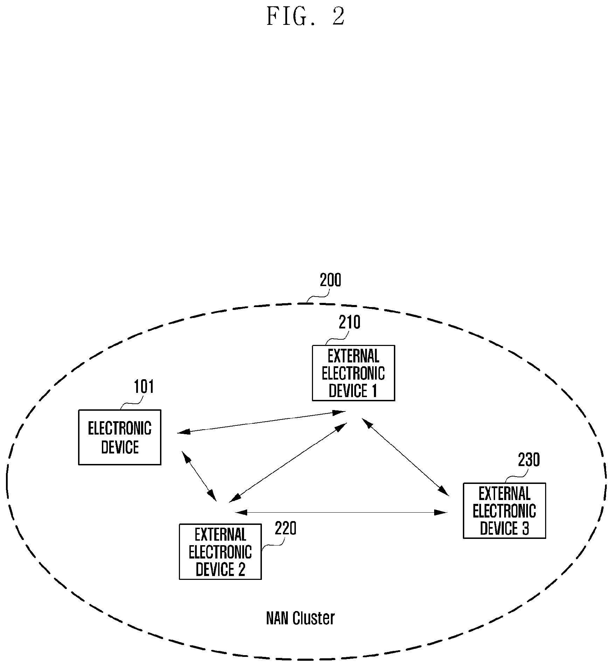

FIG. 2 is a diagram illustrating a neighbor awareness network (NAN) cluster according to various embodiments.

According to various embodiments, FIG. 2 is a diagram illustrating an example of the configuration of a NAN cluster 200 for a proximity network. According to one embodiment, the NAN cluster 200 may mean a set of electronic devices 101, 210, 220, and/or 230 that establish a proximity network so that the respective electronic device (or NAN devices) 101, 210, 220, and/or 230 can transmit and/or receive data to each other.

According to various embodiments, the NAN cluster 200 may include a plurality of electronic devices 101, 210, 220, and/or 230. The electronic devices 101, 210, 220 and/or 230 included in the NAN cluster 200 may transmit and/or receive a beacon (or discovery beacon), a service discovery frame (SDF), and/or a NAN action frame (NAF) within a synchronized time duration (or communication period) (e.g., a discovery window (DW)).

According to various embodiments, the electronic devices 101, 210, 220, and/or 230 within the NAN cluster 200 may have their time clocks synchronized with each other. For example, the electronic devices 101, 210, 220, and/or 230 may be synchronized to the time clock of one electronic device (e.g., the electronic device 101), and transmit and/or receive a beacon, an SDF, and/or an NAF in the same discovery window.

According to one embodiment, the electronic device 101 supporting a low-power short-range communication technology based on NAN may broadcast a search signal (e.g., a beacon) to discover external electronic devices 210, 220, and/or 230 every predetermined first period (e.g., about 100 msec), and perform scanning every predetermined second period (e.g., about 10 msec) to receive the search signal broadcast from the external electronic devices 210, 220, and/or 230.

According to one embodiment, the electronic device 101 may detect at least one external electronic device 210, 220 and/or 230 located around the electronic device 101 based on the search signal received through scanning, and perform NAN cluster synchronization with the detected at least one external electronic device 210, 220 and/or 230. The NAN cluster synchronization may include an operation of receiving time clock information of an electronic device (e.g., the electronic device 101) representing a NAN cluster so that the electronic devices 101, 210, 220 and/or 230 included in the NAN cluster transmit and/or receive data on the same channel and/or during the same time.

According to one embodiment, each of the plurality of electronic devices 101, 210, 220 and/or 230 may form a single NAN cluster 200 that operates according to the synchronized time clock by transmitting a beacon and receiving a beacon from other electronic devices 101, 210, 220 and/or 230. The electronic devices 101, 210, 220 and/or 230 included in the NAN cluster 200 may perform NAN cluster synchronization (e.g., time and/or channel synchronization).

According to various embodiments, NAN cluster synchronization may be performed based on the time and channel of the electronic device (e.g., the electronic device 101) with the highest master preference within the NAN cluster 200. For example, the electronic devices 101, 210, 220, and/or 230 included in the NAN cluster 200 formed through discovery may exchange signals related to master preference information indicating a preference for operating as an anchor master device. The electronic devices 101, 210, 220, and/or 230 included in the NAN cluster 200 may determine the electronic device (e.g., the electronic device 101) with the highest master preference as an anchor master device (or a master electronic device) through the signals related to the master preference information.

According to various embodiments, the anchor master device (e.g., the electronic device 101) may mean an electronic device that serves as a reference for time and channel synchronization of the electronic devices 101, 210, 220, and/or 230 included in the cluster 200. The anchor master device may be changed according to the master preference of the electronic devices 101, 210, 220, and/or 230. Each of the time and channel synchronized electronic devices 101, 210, 220, and/or 230 may transmit a beacon and/or an SDF within a discovery window (or a search period) that is repeated according to a predetermined cycle, and receive the beacon and the SDF from the other electronic devices 101, 210, 220, and/or 230 within the NAN cluster 200. In one embodiment, the beacon may be transmitted and/or received periodically every discovery window to continuously maintain time and channel synchronization of the electronic devices 101, 210, 220, and/or 230 within the NAN cluster 200. The SDF may be transmitted and/or received within the discovery window as needed to provide services to the discovered electronic devices 101, 210, 220, and/or 230. According to one embodiment, among the time and channel synchronized electronic devices 101, 210, 220, and/or 230, the electronic device (e.g., the electronic device 101) operating as the anchor master device may transmit a beacon (e.g., discovery beacon) during the interval between the discovery windows to detect new electronic devices.

According to one embodiment, each of the NAN cluster-synchronized (e.g., time and/or channel-synchronized) electronic devices 101, 210, 220, and/or 230 may transmit a NAN action frame (NAF) and receive NAFs from other electronic devices 101, 210, 220, and/or 230 within the NAN cluster 200 during a discovery window (or search interval) that repeats according to a predetermined cycle. For example, the NAF may include at least one of information related to configuring of a NAN data path (NDP), information related to scheduling update, or information related to NAN ranging to perform data communication in the interval between the discovery windows. For example, the NAF may control scheduling of wireless resources for coexistence of NAN operation and non-NAN operation (e.g., Wi-Fi Direct, mesh, IBSS, WLAN, Bluetooth, or NFC). The NAF may include time and/or channel information available for NAN communication.

According to various embodiments, each of the electronic devices 101, 210, 220, and/or 230 included in the NAN cluster 200 may operate in an active state only during the discovery window, and operate in a low-power state (e.g., a sleep state) during the remaining interval other than the discovery window, thereby reducing current consumption.

According to one embodiment, the discovery window is a period (e.g., in milliseconds) during which the electronic device 101, 210, 220, or 230 enters an active (or wake-up) state, consuming a significant amount of power. However, in the interval other than the discovery window, the electronic device 101, 210, 220, or 230 remains in a sleep state, enabling low-power discovery.

According to various embodiments, the electronic devices 101, 210, 220 and/or 230 included in the NAN cluster 200 may be simultaneously activated at the start time of the synchronized discovery window (e.g., DW start) and simultaneously transition to a sleep state at the end time of the discovery window (e.g., DW end).

According to various embodiments, each of the electronic devices 101, 210, 220, and/or 230 included in the NAN cluster 200 may transmit and/or receive data not only in the discovery window but also in the interval between the discovery windows. According to one embodiment, the electronic devices 101, 210, 220, and/or 230 included in the NAN cluster 200 may perform additional communication by configuring an active time slot in the interval between the discovery windows. For example, electronic devices 101, 210, 220 and/or 230 included in the NAN cluster 200 may transmit and/or receive SDFs that were not transmitted and/or received within the discovery window, through the active time slot. For example, the electronic devices 101, 210, 220 and/or 230 included in the NAN cluster 200 may perform NAN communication and/or non-NAN communication during the active time slot by configuring (or designating) a NAN communication operation period and/or a non-NAN communication operation period during the active time slot.

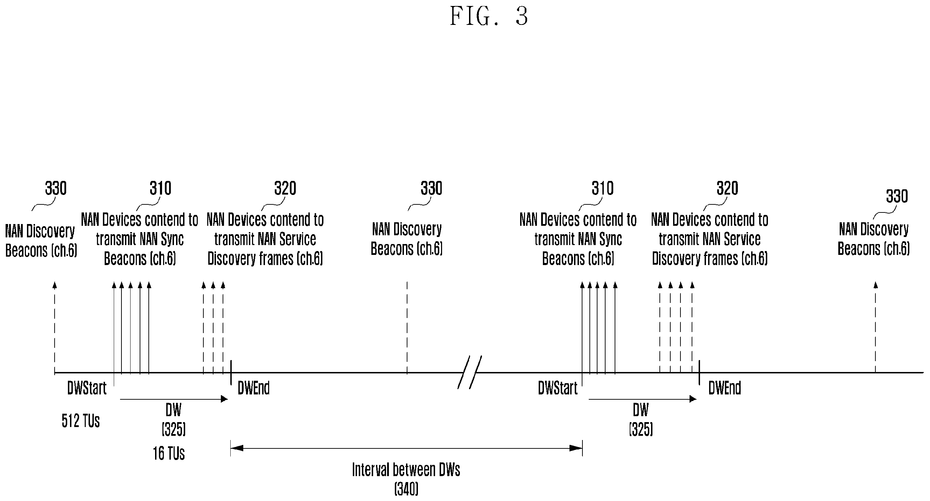

According to various embodiments, the electronic devices 101, 210, 220, and/or 230 included in the NAN cluster 200 may perform discovery, synchronization, and/or data exchange operations using a protocol illustrated in FIG. 3 described below.

FIG. 3 is a diagram illustrating a protocol for transmitting signals of an electronic device included in a NAN cluster according to various embodiments.

According to various embodiments, FIG. 3 is a diagram illustrating an example of a discovery window. In FIG. 3, it may be illustrated that electronic devices (e.g., the electronic devices 101, 210, 220, and/or 230 of FIG. 2) included in one NAN cluster (e.g., the NAN cluster 200 of FIG. 2) transmit signals through a specific channel (e.g., channel 6 (Ch6)) based on a NAN standard.

According to various embodiments, the electronic devices 101, 210, 220 and/or 230 included in one NAN cluster (e.g., the NAN cluster 200 of FIG. 2) may transmit a sync beacon 310 and an SDF 320 in a synchronized discovery window 325. A discovery beacon 330 may be transmitted by at least one electronic device 101, 210, 220 and/or 230 in another interval 340 (e.g., an interval between discovery windows) other than the discovery window 325. According to one embodiment, the electronic devices 101, 210, 220 and/or 230 may transmit the sync beacon 310 and the SDF 320 on a contention basis. For example, the sync beacon 310 and the SDF 320 may be transmitted on the contention basis between the respective electronic devices 101, 210, 220 and/or 230 belonging to a NAN cluster (e.g., the NAN cluster 200 of FIG. 2).

According to various embodiments, the electronic devices 101, 210, 220, and/or 230 included in one NAN cluster (e.g., the NAN cluster (200) of FIG. 2) may transmit and/or receive NAFs in the discovery window 325. For example, the NAF may include at least one of information related to configuring of a NAN data path (NDP), information related to scheduling update, or information related to NAN ranging to perform data communication in the interval between the discovery windows.

According to various embodiments, the discovery window 325 may be a period during which the electronic devices 101, 210, 220, and/or 230 is activated from a sleep state that is a power-saving mode, to a wake-up state for the purpose of data exchange between the electronic devices 101, 210, 220, and/or 230. For example, the discovery window 325 may be divided into time units (TUs) which are millisecond units. According to one embodiment, the discovery window 325 for transmitting and receiving the sync beacon 310 and the SDF 320 may occupy 16 time units (16 TUs) and may have a cycle (or interval) that repeats with 512 time units (512 TUs).

According to various embodiments, the discovery beacon 330 may represent a signal transmitted so that other electronic devices that have not joined the NAN cluster (e.g., the NAN cluster 200 of FIG. 2) can discover the NAN cluster. For example, the discovery beacon 330 is a signal for notifying the existence of the NAN cluster, and the electronic devices that have not joined the NAN cluster may perform passive scanning to receive the discovery beacon 330, thereby discovering and joining the NAN cluster.

According to various embodiments, the discovery beacon 330 may include information necessary to synchronize with the NAN cluster. For example, the discovery beacon 330 may include at least one of a frame control (FC) field indicating the function of a signal (e.g., a beacon), a broadcast address, a media access control (MAC) address of a transmission electronic device, a cluster identifier (ID), a sequence control field, a time stamp for a beacon frame, a beacon interval indicating a transmission interval of the discovery beacon 330, or capability information about an electronic device transmitting the discovery beacon 330.

According to various embodiments, the discovery beacon 330 may include at least one proximity network (or cluster) related information element. In one embodiment, the proximity network-related information may be referred to as attribute information.

According to various embodiments, the sync beacon 310 may indicate a signal for maintaining synchronization between the sync electronic devices 101, 210, 220, and/or 230 within the NAN cluster (e.g., the NAN cluster 200 of FIG. 2). The sync beacon 310 may be transmitted by the sync device among the electronic devices within the NAN cluster. For example, the sync device may include an anchor master device, a master device, or a non-master sync device defined in the NAN standard.

According to various embodiments, the sync beacon 310 may include information necessary for the electronic devices 101, 210, 220, and/or 230 to be synchronized within the NAN cluster (e.g., the NAN cluster 200 of FIG. 2). For example, the sync beacon 310 may include at least one of an FC field indicating the function of a signal (e.g., a beacon), a broadcast address, a MAC address of a transmission electronic device, a cluster ID, a sequence control field, a timestamp for a beacon frame, a beacon interval indicating the interval between the start points of the discovery windows 325, or capability information for a transmission electronic device. According to one embodiment, the sync beacon 310 may include at least one proximity network (or NAN cluster) related information element. For example, the proximity network-related information may include contents for a service provided through the proximity network.

According to various embodiments, the SDF 320 may represent a signal for exchanging data through the proximity network. According to one embodiment, the SDF 320 represents a vendor specific public action frame and may include various fields. For example, the SDF 320 may include a category or action field and include at least one piece of proximity network-related information.

According to various embodiments, the sync beacon 310, the SDF 320, and the discovery beacon 330 may include proximity network-related information. In one embodiment, the proximity network-related information may include an ID indicating a type of information, a length of the information, and a body field that is the corresponding information. According to one embodiment, the corresponding information may include at least one piece of master indication information, cluster information, service ID list information, service descriptor information, connection capability information, wireless LAN infrastructure information, peer to peer (P2P) operation information, independent basic service set (IBSS) information, mesh information, further proximity network service discovery information, further availability map information, country code information, ranging information, cluster discovery information, or vendor specific information.

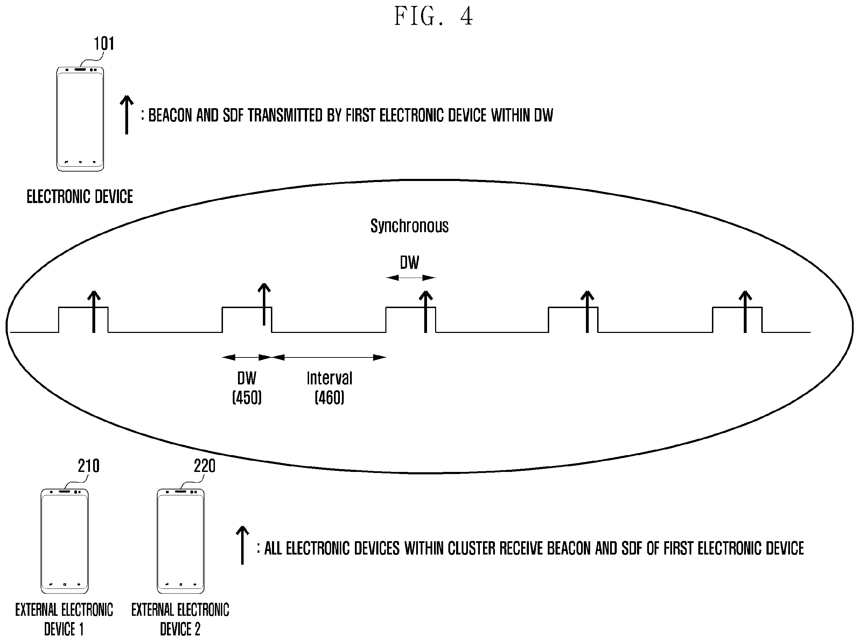

FIG. 4 is a diagram illustrating an example of data transmission and/or reception within a NAN cluster according to various embodiments.

According to various embodiments, FIG. 4 illustrates an example in which an electronic device 101, an external electronic device 1 210, and an external electronic device 2 220 form a single NAN cluster through a wireless short-range communication technology, and each of the electronic devices 101, 210, and/or 220 may transmit and/or receive a beacon, an SDF, and/or an NAF to each other. According to one embodiment, FIG. 4 illustrates an example in which the electronic device 101 among the electronic devices 101, 210, and/or 220 forming the NAN cluster performs the role of a master electronic device.

According to various embodiments, the electronic device 101 may transmit a beacon, an SDF, and/or an NAF within a discovery window 450. The electronic device 101 may broadcast the beacon, the SDF, and/or the NAF every discovery window 450 that is repeated every predetermined interval (e.g., interval 460).

According to various embodiments, the external electronic device 1 210 and the external electronic device 2 220 may receive the beacon, the SDF, and/or the NAF transmitted by the electronic device 101. According to one embodiment, each of the external electronic device 1 210 and the external electronic device 2 220 may receive the broadcast beacon, the SDF, and/or the NAF from the electronic device 101 every discovery window 450.

According to various embodiments, the beacon transmitted within the discovery window 450 may include a sync beacon and include information for maintaining synchronization between the electronic devices 101, 210, and/or 220. For example, the external electronic device 1 210 and/or the external electronic device 2 220 may perform NAN cluster synchronization based on time clock information of the electronic device 101 included in the beacon transmitted by the electronic device 101 operating as a master. The external electronic device 1 210 and/or the external electronic device 2 220 may be synchronized based on the time clock information of the electronic device 101, so that the discovery window 450 may be activated at the same time.

According to various embodiments, in an interval other than the discovery window 450 (e.g., interval 460), the electronic devices 101, 210, and/or 220 may maintain a sleep state to reduce current consumption. According to one embodiment, the electronic devices 101, 210, and/or 220 may operate in a wake state only in the discovery window 450 based on a synchronized time clock to reduce current consumption.

According to various embodiments, in the interval other than the discovery window 450 (e.g., interval 460), the electronic devices 101, 210 and/or 220 may perform additional communication by configuring an active time slot. According to one embodiment, the electronic devices 101, 210 and/or 220 may transmit and/or receive SDFs that were not transmitted and/or received within the discovery window through the active time slot. According to one embodiment, the electronic devices 101, 210 and/or 220 may perform a connection using legacy Wi-Fi or discovery operation through the active time slot by designating an operation for Wi-Fi Direct, mesh, IBSS, WLAN, Bluetooth or NFC connection in the active time slot.

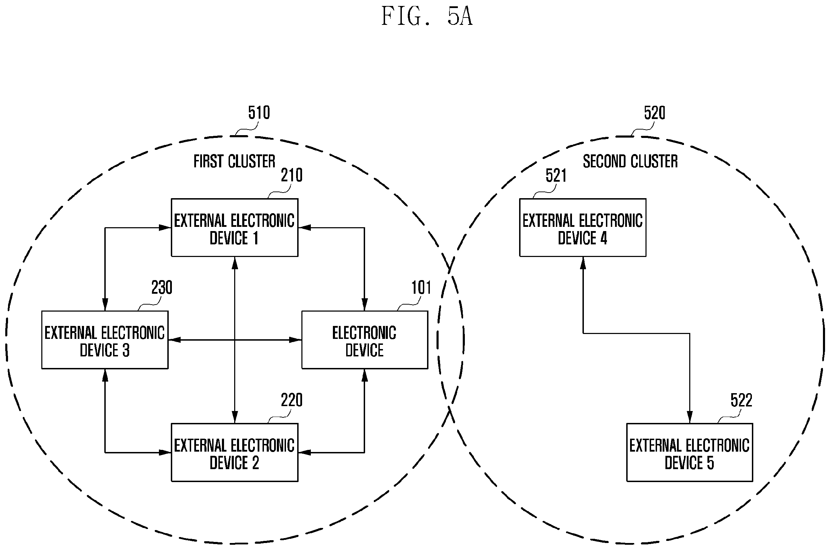

FIG. 5A is a diagram illustrating a first NAN cluster and a second NAN cluster according to various embodiments.

According to various embodiments referring to FIG. 5A, a first NAN cluster 510 (e.g., the NAN cluster 200 of FIG. 2) may include an electronic device 101, an external electronic device 1 210, an external electronic device 2 220, and/or an external electronic device 3 230. The electronic devices 101, 210, 220, and/or 230 included in the first NAN cluster 510 may operate according to a synchronized time clock. The electronic devices 101, 210, 220, and/or 230 may transmit and/or receive various signals (e.g., a beacon signal and/or a sync signal) during a promised discovery window (e.g., the discovery window 450 of FIG. 4) in the first NAN cluster 510. The electronic devices 101, 210, 220 and/or 230 may perform scanning to determine whether the second NAN cluster 520, which is a NAN cluster different from the first NAN cluster 510, exists in an interval other than the discovery window. For example, the electronic devices 101, 210, 220 and/or 230 included in the first NAN cluster 510 may perform scanning in the interval other than the discovery window to determine whether signals broadcast by the electronic devices 521 and/or 522 included in the second NAN cluster 520 are detected (or received).

According to various embodiments, the second NAN cluster 520 may include an external electronic device 4 521 and/or an external electronic device 5 522. The electronic devices 521 and/or 522 included in the second NAN cluster 520 may operate according to a synchronized time clock. The electronic devices 521 and/or 522 may transmit and/or receive various signals (e.g., beacon signals and/or sync signals) during a promised discovery window in the second NAN cluster 520. The electronic devices 521 and/or 522 may perform scanning to determine whether the first NAN cluster 510, which is a NAN cluster different from the second NAN cluster 520, exists in the interval other than the discovery window. For example, the electronic devices 521 and/or 522 included in the second NAN cluster 520 may detect (or receive) signals broadcast by the electronic devices 101, 210, 220 and/or 230 included in the first NAN cluster 510 through scanning in the interval other than the discovery window.

Hereinafter, an embodiment in which the first NAN cluster 510 and the second NAN cluster 520 are merged will be described, and for convenience of description, the electronic device 101 of the first NAN cluster 510 (e.g., anchor master device) and the external electronic device 4 521 of the second NAN cluster 520 (e.g., anchor master device) will be described as the basis, but other electronic devices (e.g., the external electronic device 1 210, the external electronic device 2 220, the external electronic device 3 230, and/or the external electronic device 5 522) can also operate in the same manner.

According to various embodiments, the electronic device 101 may receive a signal (e.g., a sync beacon, which is a signal for synchronization of the second NAN cluster 520 or a discovery beacon, which is a signal for searching for another NAN cluster) broadcast by the electronic device 521 or 522 of the second NAN cluster 520 while performing scanning. The electronic device 101 may identify the existence of the second NAN cluster 520 based on information (e.g., attribute information of the second NAN cluster 520) included in signals transmitted by the external electronic device 4 521 and/or the external electronic device 5 522.

According to various embodiments, when the electronic device 101 recognizes the existence of the second NAN cluster 520 through scanning, the electronic device 101 may determine whether to perform merging of the first NAN cluster 510 and the second NAN cluster 520. The electronic device 101 may determine whether to perform merging of the first NAN cluster 510 and the second NAN cluster 520 based on the characteristics of the second NAN cluster 520 included in the signal transmitted (or broadcast) by the external electronic device 4 521 and/or the external electronic device 5 522. According to one embodiment, the electronic device 101 may determine not to merge the first NAN cluster 510 and the second NAN cluster 520 based on determining that a first merging criterion (MC) value (e.g., about "4") of the first NAN cluster 510 is greater than a second MC value (e.g., about "2") of the second NAN cluster 520 included in the characteristics of the second NAN cluster 520. For example, when the first MC value of the first NAN cluster 510 is greater than the second MC value of the second NAN cluster 520, the electronic device 101 may compare a first cluster grade (CG) of the first NAN cluster 510 with the second CG of the second NAN cluster 520 included in the characteristics of the second NAN cluster 520. The electronic device 101 may update the first CG to a value (e.g., about "85") higher than the second CG when the second CG (e.g., about "80") of the second NAN cluster 520 included in the characteristics of the second NAN cluster 520 is greater than the first CG (e.g., about "60") of the first NAN cluster 510. The electronic device 101 may determine not to merge the first NAN cluster 510 and the second NAN cluster 520 based on determining that the first MC value and the first CG of the first NAN cluster 510 are greater than the second MC value and the second CG of the second NAN cluster 520. For example, the determination not to merge the first NAN cluster 510 and the second NAN cluster 520 may include determining that the electronic devices included in the second NAN cluster 520 (e.g., the external electronic device 4 521 and/or external electronic device 5 522) perform merging into the first NAN cluster 510. For example, the update of the CG may include a series of operations that modify a master preference (MP) value of the electronic device 101 (e.g., an anchor master device) and/or a random factor value associated with the CG. For example, the MC value may be configured based on at least one of the size of the NAN cluster 510 or 520, the number of NAN data paths (NDPs) activated within the NAN cluster 510 or 520, or the number of NAN data links (NDLs) activated within the NAN cluster 510 or 520. For example, the size of the NAN cluster 510 or 520 may represent the number of electronic devices included in the NAN cluster 510 or 520.

According to various embodiments, the external electronic device 4 521 may receive a signal (e.g., a sync beacon, which is a signal for synchronizing the first NAN cluster 510, or a discovery beacon, which is a signal for searching for another NAN cluster) broadcast by the electronic devices 101, 210, 220, and/or 230 of the first NAN cluster 510 while performing scanning. The external electronic device 4 521 may identify the existence of the first NAN cluster 510 based on information (e.g., attribute information of the first NAN cluster 510) included in the signal transmitted by the electronic devices 101, 210, 220, and/or 230 of the first NAN cluster 510.

According to various embodiments, when the external electronic device 4 521 recognizes the existence of the first NAN cluster 510 through scanning, the external electronic device 4 521 may determine whether to merge the first NAN cluster 510 and the second NAN cluster 520. The external electronic device 4 521 may determine whether to merge the first NAN cluster 510 and the second NAN cluster 520 based on the characteristics of the first NAN cluster 510 included in the signal transmitted (or broadcast) by the electronic device 101, 210, 220, and/or 230 of the first NAN cluster 510. According to one embodiment, the external electronic device 4 521 may determine to merge the first NAN cluster 510 and the second NAN cluster 520 based on the determination that the first MC value (e.g., about "4") of the first NAN cluster 510 included in the characteristics of the first NAN cluster 510 is greater than the second MC value (e.g., about "2") of the second NAN cluster 520. For example, when the first MC value of the first NAN cluster 510 is greater than the second MC value of the second NAN cluster 520, the external electronic device 4 521 may compare a first CG of the first NAN cluster 510 and a second CG of the second NAN cluster 520 included in the characteristics of the first NAN cluster 510. When the second CG (e.g., about "80") of the second NAN cluster 520 is greater than the first CG (e.g., about "60") of the first NAN cluster 510, the external electronic device 4 521 may update the second CG to a lower value (e.g., about "50") than the first CG. The external electronic device 4 521 may determine to merge the first NAN cluster 510 and the second NAN cluster 520 based on the determination that the first MC value and the first CG of the first NAN cluster 510 is greater than the second MC value and the second CG of the second NAN cluster 520. For example, the merging of the first NAN cluster 510 and the second NAN cluster 520 may include a state in which the electronic devices 521 and/or 522 included in the second NAN cluster 520 perform merging into the first NAN cluster 510. For example, the update of the CG may include a series of operations that modify a master preference (MP) value of the external electronic device 4 521 (e.g., an anchor master device) and/or a random factor value associated with the CG.

According to various embodiments, based on determination to merge the first NAN cluster 510 and the second NAN cluster 520, the external electronic device 4 521 (e.g., the anchor master device) may transmit a signal (e.g., a beacon signal or a sync signal) including information (attribute information of the first NAN cluster 510) of the first NAN cluster 510 different from the currently included second NAN cluster 520, to other electronic devices (e.g., the external electronic device 5 522) included in the second NAN cluster 520, during a discovery window of the second NAN cluster 520. According to one embodiment, the external electronic device 4 521 may merge (or join) into the first NAN cluster 510 based on the determination to merge the first NAN cluster 510 and the second NAN cluster 520.

According to one embodiment, the external electronic device 5 522 may merge (or join) into the first NAN cluster 510 based on the information transmitted by the external electronic device 4 521.

According to one embodiment, the external electronic device 5 522 may determine to merge the first NAN cluster 510 and the second NAN cluster 520 based on the determination that the first MC value (e.g., about "4") of the first NAN cluster 510 included in the characteristics of the first NAN cluster is greater than the second MC value (e.g., about "2") of the second NAN cluster 520. The external electronic device 5 522 may merge (or join) into the first NAN cluster 510 based on determination to merge the first NAN cluster 510 and the second NAN cluster 520.

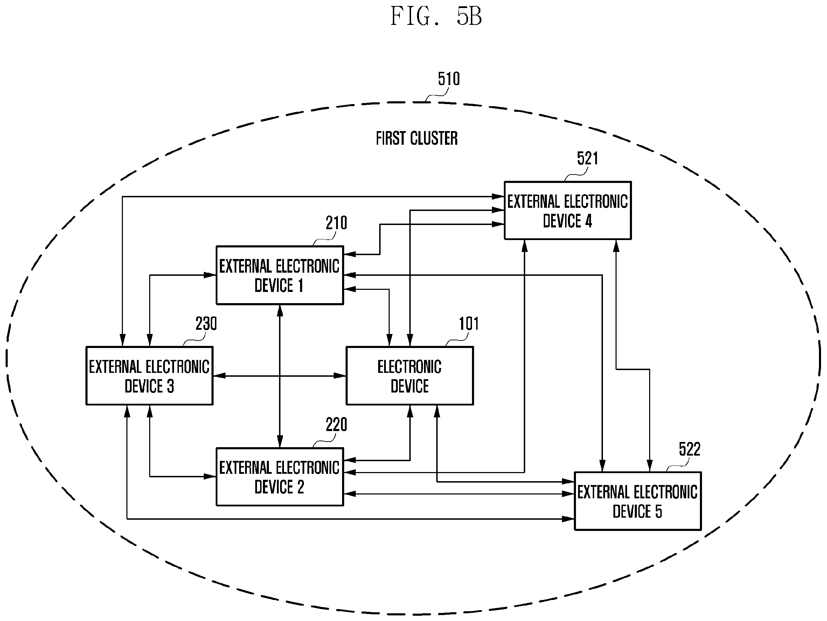

FIG. 5B is a diagram illustrating an example of merging a first NAN cluster and a second NAN cluster according to various embodiments.

According to various embodiments referring to FIG. 5B, the external electronic device 4 521 and/or external electronic device 5 522 included in a second NAN cluster (e.g., the second NAN cluster 520 of FIG. 5A) may be merged into the first NAN cluster 510.

According to various embodiments, the electronic devices 101, 210, 220, 230, 521 and/or 522 included in the first NAN cluster 510 may operate according to a synchronized time clock. The electronic devices 101, 210, 220, 230, 521 and/or 522 may transmit or receive various signals (e.g., beacon signals and/or sync signals) during a promised discovery window (e.g., the discovery window 450 of FIG. 4) in the first NAN cluster 101.

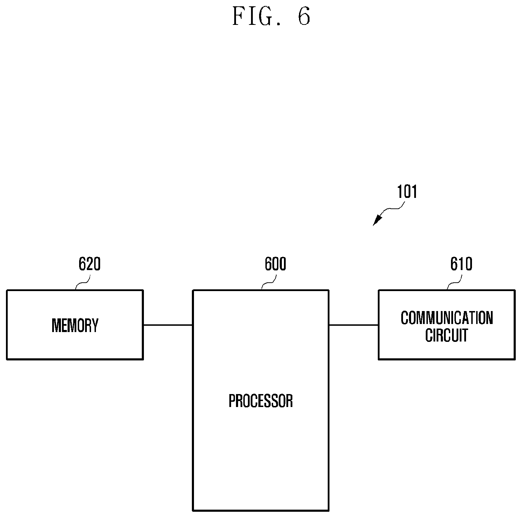

FIG. 6 is a block diagram illustrating an electronic device for merging NAN clusters according to various embodiments. According to one embodiment, the electronic device 101 of FIG. 6 may be at least partially similar to the electronic device 101 of FIG. 1, FIG. 2, FIG. 3, FIG. 4, FIG. 5A or FIG. 5B, or may include other embodiments of the electronic device.

According to various embodiments referring to FIG. 6, the electronic device 101 may include a processor (e.g., including processing circuitry) 600, a communication circuit (or communication circuitry) 610, and/or a memory 620. According to one embodiment, the processor 600 may be substantially the same as the processor 120 (e.g., an application processor and/or a communication processor) of FIG. 1, or may be included in the processor 120. The communication circuit 610 may be substantially the same as the wireless communication module 192 of FIG. 1, or may be included in the wireless communication module 192. The memory 620 may be substantially the same as the memory 130 of FIG. 1, or may be included in the memory 130. According to one embodiment, the processor 600 may be operatively, functionally, and/or electrically connected to the communication circuit 610 and/or the memory 620.

According to various embodiments, the communication circuit 610 may include various circuit structures used for modulating and/or demodulating signals within the electronic device 101. According to one embodiment, the communication circuit 610 may modulate a baseband signal into a signal of a radio frequency (RF) band to be output through an antenna (not shown), or demodulate the signal of the RF band received through the antenna into the baseband signal and transmit the demodulated signal to the processor 600. According to one embodiment, the communication circuit 610 may transmit and/or receive a variety of data to and from other electronic devices (e.g., the electronic devices 101, 210, 220 and/or 230 of FIG. 2) through a frequency band (e.g., about 2.4 GHz band, about 5 GHz band, and/or about 6 GHz band) used by the electronic devices (e.g., the electronic devices 101, 210, 220 and/or 230 of FIG. 2) of the first NAN cluster (e.g., the NAN cluster 200 of FIG. 2 or the first NAN cluster 510 of FIG. 5A).

According to various embodiments, the processor 600 may control the communication circuit 610 to form a first NAN cluster (e.g., the NAN cluster 200 of FIG. 2 or the first NAN cluster 510 of FIG. 5A) through NAN cluster synchronization with at least one external electronic device (e.g., the external electronic devices 210, 220, and/or 230 of FIG. 2). According to one embodiment, the processor 600 may perform NAN cluster synchronization based on NAN cluster information included in a signal broadcast by an external electronic device (e.g., the external electronic devices 210, 220, and/or 230 of FIG. 2) included in a cluster (or network) (e.g., the NAN cluster 200 of FIG. 2) implemented in a NAN manner.

According to various embodiments, the processor 600 may receive the NAN cluster information via a non-NAN-based communication method (e.g., Bluetooth, or short-range wireless communication including Wi-Fi). According to one embodiment, the processor 600 may control the communication circuit 610 to transmit a probe request signal to find an external electronic device (e.g., the external electronic devices 210, 220, and/or 230 of FIG. 2) via a wireless LAN (e.g., Wi-Fi) network. The processor 600 may perform NAN cluster synchronization based on the NAN cluster information included in a probe response message received from the external electronic device (e.g., the external electronic devices 210, 220, and/or 230 of FIG. 2) in response to the probe request signal.

According to various embodiments, NAN cluster synchronization may include an operation of receiving time clock information of the electronic device 101 representing a first NAN cluster (e.g., a master device or an anchor master device) so that the electronic devices (e.g., the electronic devices 101, 210, 220, and/or 230 of FIG. 2) included in the first NAN cluster (e.g., the NAN cluster 200 of FIG. 2 or the first NAN cluster 510 of FIG. 5A) transmit and/or receive data through the same channel and/or the same time resource. According to one embodiment, the processor 600 may control the communication circuit 610 to transmit (or broadcast) a beacon including time clock information of the electronic device 101 through a discovery window for NAN cluster synchronization of the external electronic device (e.g., the external electronic devices 210, 220, and/or 230 of FIG. 2). According to one embodiment, the processor 600 may perform NAN cluster synchronization based on time clock information of the external electronic device (e.g., the external electronic devices 210, 220 and/or 230 of FIG. 2) included in the beacon received from the external electronic device (e.g., the external electronic devices 210, 220 and/or 230 of FIG. 2).

According to various embodiments, the processor 600 may identify the first MC value and/or first CG of the first NAN cluster in which the electronic device 101 is included. According to one embodiment, the processor 600 may identify (or estimate) the first MC value of the first NAN cluster based on at least one of the size of the first NAN cluster, the number of NAN data paths (NDPs) activated within the first NAN cluster, or the number of NAN data links (NDLs) activated within the first NAN cluster. For example, the size of the first NAN cluster indicates the number of electronic devices included in the first NAN cluster, and may be identified (or estimated) based on information related to an NAN management interface address (NMI) recorded (or stored) in a bloom filter included in the electronic device 101, as in the following Equation 1.

$$[\text{Equation 1}]$$
$$x = -m \cdot \ln(1 - \frac{N}{m}) / k$$

For example, x denotes the size of the first NAN cluster, m denotes the size of the bloom filter, N denotes the number of bits in which information related to the NMI is recorded (or stored) in the bloom filter, and k indicates the number of hash functions included in the bloom filter. For example, the information related to the NMI recorded (or stored) in the bloom filter may include a hash value obtained by processing NMI of "AA:BB:CC:DD:EE:FF" received by the electronic device 101 from an external electronic device through hash functions included in the bloom filter.

For example, the number of NDPs activated within the first NAN cluster and/or the number of NDLs activated within the first NAN cluster, which represents the number of data links activated for data communication in the first NAN cluster, may be identified (or estimated) based on information related to NAN data interface address (NDI) recorded (or stored) in the bloom filter included in the electronic device 101. For example, the number of NDPs activated within the first NAN cluster and/or the number of NDLs activated within the first NAN cluster may be obtained (or estimated) by replacing "N" in Equation 1 with the number of bits in which the information related to the NDI is recorded (or stored) in the bloom filter.

According to one embodiment, the processor 600 may determine (or estimate) the first GC of the first NAN cluster based on at least one of a master preference (MP) of an anchor master device (e.g., the electronic device 101) of the first NAN cluster or a time synchronization function (TSF) thereof.

According to various embodiments, the processor 600 may control the communication circuit 610 to perform scanning to determine whether a second NAN cluster (e.g., the second NAN cluster 520 of FIG. 5A) other than the first NAN cluster including the electronic device 101 exists. According to one embodiment, the processor 600 may control the communication circuit 610 to perform scanning in an interval other than the discovery window. The processor 600 may receive a signal (e.g., a discovery beacon of the second NAN cluster) broadcast by the electronic device of the second NAN cluster (e.g., the external electronic devices 521 and/or 522 of FIG. 5A) through scanning. The processor 600 may identify the existence of the second NAN cluster based on information (e.g., attribute information of the second NAN cluster) included in a signal acquired from the electronic device of the second NAN cluster through scanning. For example, the scanning may include a series of operations for determining whether the signal broadcasted by the electronic devices (e.g., the external electronic devices 521 and/or 522 of FIG. 5A) included in the second NAN cluster other than the first NAN cluster including the electronic device 101 is detected (or received). For example, an interval other than the discovery window may include an interval between the discovery windows.

According to one embodiment, the processor 600 may receive the signal (e.g., a sync beacon of the second NAN cluster) broadcast by the electronic device of the second NAN cluster (e.g., the external electronic devices 521 and/or 522 of FIG. 5A) in the discovery window. The processor 600 may identify the existence of the second NAN cluster based on information (e.g., attribute information of the second NAN cluster) included in the signal acquired from the electronic device of the second NAN cluster through scanning.

According to various embodiments, when the processor 600 identifies the existence of the second NAN cluster (e.g., the second NAN cluster 520 of FIG. 5A) different from the first NAN cluster including the electronic device 101, the processor 600 may identify a second MC value and/or second CG of the second NAN cluster. According to one embodiment, the processor 600 may identify (or obtain) information related to the second MC value and/or second CG of the second NAN cluster from the signal (e.g., a sync beacon and/or a discovery beacon of the second NAN cluster) received from the electronic device of the second NAN cluster (e.g., the external electronic devices 521 and/or 522 of FIG. 5A).

According to various embodiments, the processor 600 may identify (or determine) the merging direction of the first NAN cluster and the second NAN cluster. According to one embodiment, when the electronic device 101 is an anchor master device of the first NAN cluster, the processor 600 may identify (or determine) the merging direction of the first NAN cluster and the second NAN cluster based on the first MC value and first CG of the first NAN cluster and the second MC value and second CG of the second NAN cluster. For example, when the first MC value and first CG of the first NAN cluster are greater than the second MC value and second CG of the second NAN cluster, the processor 600 may determine that the second NAN cluster is merged into the first NAN cluster. For example, merging into the first NAN cluster may include a series of operations in which the electronic devices included in the second NAN cluster are synchronized to the first NAN cluster.

For example, the processor 600 may determine that the first NAN cluster is merged into the second NAN cluster when the second MC value and second CG of the second NAN cluster are greater than the first MC value and first CG of the first NAN cluster. As an example, merging into the second NAN cluster may include a series of operations in which the electronic devices included in the first NAN cluster are synchronized to the first NAN cluster.

For example, when the first MC value of the first NAN cluster is greater than the second MC value of the second NAN cluster, but the second CG of the second NAN cluster is greater than the first CG of the first NAN cluster, the processor 600 may update the first CG to a value higher than the second CG. The processor 600 may determine that the second NAN cluster is merged into the first NAN cluster based on the determination that the first MC value and the first CG of the first NAN cluster is greater than the second MC value and the second CG of the second NAN cluster. For example, the update of the CG may include a series of operations that modify a master preference (MP) value of the electronic device 101 (e.g., an anchor master) and/or a random factor value associated with the CG.

For example, the processor 600 may update the first CG to a value lower than the second CG when the second MC value of the second NAN cluster is greater than the first MC value of the first NAN cluster, but the first CG of the first NAN cluster is greater than the second CG of the second NAN cluster. The processor 600 may determine that the first NAN cluster is merged into the second NAN cluster based on the determination that the second MC value and second CG of the second NAN cluster are greater than the first MC value and first CG of the first NAN cluster.

According to one embodiment, the processor 600 may identify (or determine) the merging direction of the first NAN cluster and the second NAN cluster based on the first MC value of the first NAN cluster and the second MC value of the second NAN cluster, when the electronic device 101 is not the anchor master device of the first NAN cluster (e.g., a master electronic device, a non-master synchronous device, and/or a non-master asynchronous device). For example, the processor 600 may determine that the second NAN cluster is merged into the first NAN cluster when the first MC value of the first NAN cluster is greater than the second MC value of the second NAN cluster. For example, the processor 600 may determine that the first NAN cluster is merged into the second NAN cluster when the second MC value of the second NAN cluster is greater than the first MC value of the first NAN cluster.

According to various embodiments, when the processor 600 determines to merge into the second NAN cluster, the processor 600 may control the communication circuit 610 to perform the merging into the second NAN cluster. According to one embodiment, when the electronic device 101 is the anchor master device of the first NAN cluster, the processor 600 may control the communication circuit 610 to transmit a signal (e.g., a beacon signal or a synchronization signal) including information related to the second NAN cluster (e.g., attribute information of the second NAN cluster) to other electronic devices included in the first NAN cluster during the discovery window of the first NAN cluster. The processor 600 may control the communication circuit 610 to perform merging into the second NAN cluster after transmitting the signal including information related to the second NAN cluster. For example, merging into the second NAN cluster may include at least one operation among clock synchronization with the electronic devices included in the second NAN cluster, address configuring of the electronic device 101 based on the address of the anchor master device of the second NAN cluster, or reconfiguring of ID information of the NAN cluster of the electronic device 101.

According to various embodiments, the memory 620 may store a variety of data used by at least one component of the electronic device 101 (e.g., the processor 600 and/or the communication circuit 610). According to one embodiment, the memory 620 may store various instructions that can be executed by the processor 600.

According to various embodiments, the electronic device other than the electronic device 101 included in the first NAN cluster may perform merging into the second NAN cluster based on the signal including information related to the second NAN cluster (e.g., attribute information of the second NAN cluster) received from the electronic device 101.

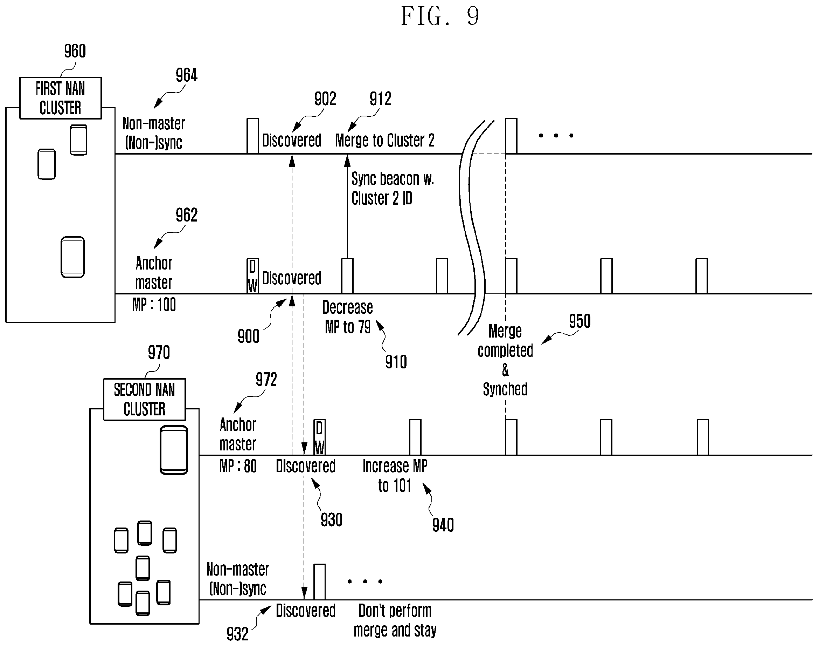

According to various embodiments, an electronic device (e.g., the electronic device 101 of FIG. 1, FIG. 2, FIG. 3, FIG. 4, FIG. 5A, FIG. 5B or FIG. 6) may include a communication circuit (e.g., the wireless communication module 192 of FIG. 1 or the communication circuit 610 of FIG. 6) and a processor (e.g., the processor 120 of FIG. 1 or the processor 600 of FIG. 6) operatively connected to the communication circuit. According to one embodiment, the processor may form a first neighbor awareness network (NAN) cluster (e.g., the NAN cluster 200 of FIG. 2, the first NAN cluster 510 of FIG. 5A or FIG. 5B, or a first NAN cluster 960 of FIG. 9) with at least one first external electronic device. According to one embodiment, the processor may identify a second MC value and second CG of the second NAN cluster based on the discovery of a second NAN cluster (e.g., the NAN cluster 200 of FIG. 2, the second NAN cluster 520 of FIG. 5A or FIG. 5B, or the second NAN cluster 970 of FIG. 9) that is different from the first NAN cluster. According to one embodiment, the processor may update a first CG of the first NAN cluster based on the second MC value and the first MC value of the first NAN cluster. According to one embodiment, the processor may identify the merging direction of the first NAN cluster and the second NAN cluster based on the first MC value, the second MC value, the updated first CG, and/or the updated second CG.

According to various embodiments, the first MC value may be configured based on at least one of a cluster size of the first NAN cluster, the number of NAN data paths (NDPs) activated within the first NAN cluster, or the number of NAN data links (NDLs) activated within the first NAN cluster.

According to various embodiments, the second MC value may be configured based on at least one of a cluster size of the second NAN cluster, the number of NDPs activated within the second NAN cluster, or the number of NDLs activated within the second NAN cluster.

According to various embodiments, the processor may identify at least one of the cluster size of the first NAN cluster, the number of NDPs activated within the first NAN cluster, or the number of NDLs activated within the first NAN cluster based on information stored in a bloom filter of the electronic device.

According to various embodiments, the processor may identify the second NAN cluster based on a signal of at least one second external electronic device included in the second NAN cluster received through scanning during an interval other than a DM of the first NAN cluster.

According to various embodiments, the processor may update the first CG to be less than the second CG when the second MV value is greater than the first MC value and the first CG is greater than the second CG.

According to various embodiments, the processor may update the first CG to be greater than the second CG when the first MC value is greater than the second MC value and the second CG is greater than the first CG.

According to various embodiments, the processor may update the first CG by updating at least one of a master preference value of an anchor mister device of the first NAN cluster or a random factor value associated with the configuring of the first CG.

According to various embodiments, the processor may configure a merging direction in which the first NAN cluster is merged into the second NAN cluster when the second MC value is greater than the first MC value and the second CG is greater than the updated first CG.

According to various embodiments, the processor may transmit information related to the second NAN cluster to at least one first external electronic device included in the first NAN cluster based on a determination that the first NAN cluster is merged into the second NAN cluster through the communication circuit, when the electronic device is an anchor master device of the first NAN cluster, and perform synchronization with the second NAN cluster.

According to various embodiments, the processor may configure the merging direction in that the second NAN cluster is merged into the first NAN cluster when the first MC value is greater than the second MC value and the updated first CG is greater than the second CG.

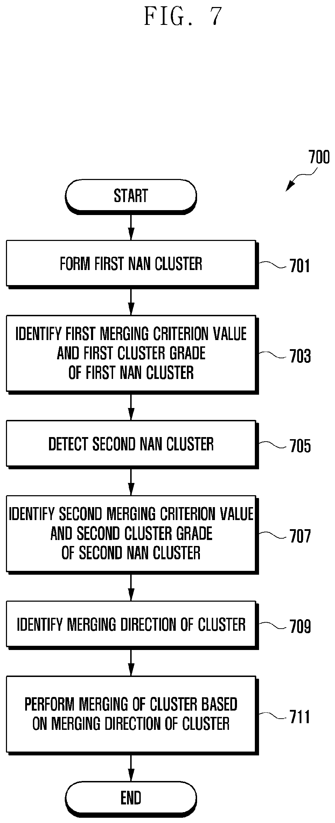

FIG. 7 is a flowchart 700 for merging NAN clusters in an electronic device according to various embodiments. In the following embodiments, operations may be performed sequentially, but are not necessarily performed sequentially. For example, the order of the operations may be changed, and at least two operations may be performed in parallel. For example, the electronic device of FIG. 7 may be the electronic device 101 of FIG. 1, FIG. 2, FIG. 3, FIG. 4, FIG. 5A, FIG. 5B, or FIG. 6. For example, at least a portion of FIG. 7 may be described with reference to FIG. 9. FIG. 9 is a diagram illustrating an example for merging NAN clusters in an electronic device according to various embodiments.

According to various embodiments referring to FIGS. 7 and 9, in operation 701, an electronic device (e.g., the electronic device 101 of FIG. 1, FIG. 2, FIG. 3, FIG. 4, FIG. 5A, FIG. 5B, or FIG. 6) or a processor (e.g., the processor 120 of FIG. 1 or the processor 600 of FIG. 6) may form (or generate) a first NAN cluster with at least one external electronic device. According to one embodiment, the processor 600 may control the communication circuit 610 to form a first NAN cluster 960 through NAN cluster synchronization with at least one external electronic device (e.g., the external electronic devices 210, 220, and/or 230 of FIG. 2 or FIG. 5A), as shown in FIG. 9. For example, NAN cluster synchronization may include a series of operations in which electronic devices included in the first NAN cluster (e.g., the electronic devices 101, 210, 220, and/or 230 of FIG. 2) are synchronized based on time clock information of the electronic device 101 representing the first NAN cluster (e.g., a master device or an anchor master device) so that data is transmitted and/or received through the same channel and/or the same time resource. For example, the time clock information of the electronic device 101 (e.g., an anchor master device) may be transmitted (or broadcast) to the electronic devices included in the first NAN cluster via a beacon (e.g., a sync beacon) within a discovery window.

According to various embodiments, in operation 703, the electronic device (e.g., the electronic device 101) or the processor (e.g., processor 120 or 600) may identify a first MC value and/or first CG of the first NAN cluster including the electronic device 101. According to one embodiment, the processor 600 may identify (or estimate) the first CG (e.g., about "100") of the first NAN cluster based on at least one of a master preference (MP) or a time synchronization function (TSF) of the anchor master device (e.g., the electronic device 101) of the first NAN cluster.

According to one embodiment, the processor 600 may identify (or estimate) the first MC value (e.g., about "3") of the first NAN cluster based on at least one of the size of the first NAN cluster, the number of NAN data paths (NDPs) activated within the first NAN cluster, or the number of NAN data links (NDLs) activated within the first NAN cluster. For example, the size of the first NAN cluster indicates the number of electronic devices included in the first NAN cluster, and may be identified (or estimated) based on information related to an NAN management interface address (NMI) recorded (or stored) in a bloom filter included in the electronic device 101, as in Equation 1. For example, the number of NDPs activated within the first NAN cluster and/or the number of NDLs activated within the first NAN cluster may be identified (or estimated) based on information related to an NAN data interface address (NDI) recorded (or stored) in a bloom filter included in the electronic device 101, which indicates the number of data links activated for data communication in the first NAN cluster.

According to one embodiment, the processor 600 may determine a first MC value to which a weight is applied based on an average of the MC values to which weights are applied based on a weighted average method, when a plurality of MC values are included based on different criteria. According to one embodiment, the processor 600 may select one of the plurality of MC values as the first MC value based on a priority of each MC value, when the plurality of MC values are included based on different criteria.

According to various embodiments, in operation 705, the electronic device (e.g., the electronic device 101) or the processor (e.g., the processor 120 or 600) may detect a second NAN cluster that is different from the first NAN cluster including the electronic device 101. According to one embodiment, the processor 600 may receive a signal (e.g., a discovery beacon of the second NAN cluster) broadcast by the electronic device (e.g., the external electronic devices 521 and/or 522 of FIG. 5A) of the second NAN cluster through scanning in an interval other than a discovery window 900 or 902. The processor 600 may identify the existence of the second NAN cluster 970 based on information (e.g., attribute information of the second NAN cluster) included in a signal acquired from the electronic device of the second NAN cluster through scanning. For example, the scanning may include a series of operations to determine whether the signal broadcast by the electronic devices (e.g., the external electronic devices 521 and/or 522 of FIG. 5A) included in the second NAN cluster different from the first NAN cluster including the electronic device 101 is detected (or received). For example, the interval other than the discovery window may include an interval between the discovery windows.

According to one embodiment, the processor 600 may receive the signal (e.g., a sync beacon of the second NAN cluster) broadcast by the electronic device of the second NAN cluster (e.g., the external electronic devices 521 and/or 522 of FIG. 5A) in the discovery window. The processor 600 may identify the existence of the second NAN cluster 970 based on information (e.g., attribute information of the second NAN cluster) included in the signal acquired from the electronic device of the second NAN cluster through scanning.

According to various embodiments, in operation 707, the electronic device (e.g., the electronic device 101) or the processor (e.g., the processor 120 or 600) may identify a second MC value and/or second CG of the second NAN cluster. According to one embodiment, the processor 600 may identify (or obtain) information related to the second MC value (e.g., about "8") and/or the second CG (e.g., about "80") of the second NAN cluster from the signal (e.g., a sync beacon and/or a discovery beacon of the second NAN cluster) received from the electronic device of the second NAN cluster (e.g., the external electronic devices 521 and/or 522 of FIG. 5A).

According to various embodiments, in operation 709, the electronic device (e.g., the electronic device 101) or the processor (e.g., the processor 120 or 600) may identify (or configure) a merging direction of the first NAN cluster and the second NAN cluster. According to one embodiment, when the electronic device 101 is an anchor master device 962 of the first NAN cluster, the processor 600 may identify (or determine) the merging direction of the first NAN cluster and the second NAN cluster based on the first MC value and first CG of the first NAN cluster 960 and the second MC value and second CG of the second NAN cluster 970. For example, the processor 600 may determine that the second NAN cluster 970 is merged into the first NAN cluster 960 when the first MC value and first CG of the first NAN cluster 960 are greater than the second MC value and second CG of the second NAN cluster 970.

For example, the processor 600 may determine that the first NAN cluster 960 is merged into the second NAN cluster 970 when the second MC value and second CG of the second NAN cluster 970 are greater than the first MC value and first CG of the first NAN cluster 960.

For example, when the first MC value of the first NAN cluster 960 is greater than the second MC value of the second NAN cluster 970, but the second CG of the second NAN cluster 970 is greater than the first CG of the first NAN cluster 960, the processor 600 may update the first CG of the first NAN cluster 960 to a value (e.g., about "79") 910 higher than the second CG of the second NAN cluster 970. The processor 600 may determine that the second NAN cluster is merged into the first NAN cluster based on the determination that the first MC value and first CG of the first NAN cluster 960 are greater than the second MC value and second CG of the second NAN cluster 970. For example, the update of the CG may include a series of operations that modify a master preference (MP) value of the electronic device 101 (e.g., an anchor master) and/or a random factor value associated with the CG.

For example, when the second MC value of the second NAN cluster 970 is greater than the first MC value of the first NAN cluster 960, but the first CG of the first NAN cluster 960 is greater than the second CG of the second NAN cluster 970, the processor 600 may update the first CG to a value lower than the second CG. The processor 600 may determine that the first NAN cluster 960 is merged into the second NAN cluster 970 based on the determination that the second MC value and second CG of the second NAN cluster 970 are greater than the first MC value and the first CG of the first NAN cluster 960.

According to one embodiment, the processor 600 may determine (or identify) the merging direction of the first NAN cluster and the second NAN cluster based on the first MC value of the first NAN cluster 960 and the second MC value of the second NAN cluster 970, when the electronic device 101 is not the anchor master device of the first NAN cluster 964 (e.g., a master electronic device, a non-master synchronous device, and/or a non-master asynchronous device). For example, the processor 600 may determine that the second NAN cluster 970 is merged into the first NAN cluster 960 when the first MC value of the first NAN cluster 960 is greater than the second MC value of the second NAN cluster 970. For example, the processor 600 may determine that the first NAN cluster 960 is merged into the second NAN cluster 970 when the second MC value of the second NAN cluster 970 is greater than the first MC value of the first NAN cluster 960.

According to various embodiments, in operation 711, the electronic device (e.g., the electronic device 101) or the processor (e.g., the processor 120 or 600) may perform cluster merging based on the merging direction of the clusters. According to one embodiment, when the processor 600 determines to merge into the second NAN cluster, the processor 600 may control the communication circuit 610 to perform merging into the second NAN cluster. For example, when the electronic device 101 is the anchor master device 962 of the first NAN cluster 960, the processor 600 may control the communication circuit 610 to transmit a signal 912 (e.g., a beacon signal or a synchronization signal) including information related to the second NAN cluster 970 (e.g., attribute information of the second NAN cluster) to another electronic device 964 included in the first NAN cluster 960 during a discovery window of the first NAN cluster 960. After transmitting the signal 912 including the information related to the second NAN cluster 970, the processor 600 may control the communication circuit 610 to perform merging 950 into the second NAN cluster 970. For example, merging into the second NAN cluster may include at least one operation among clock synchronizing with the electronic devices included in the second NAN cluster, configuring of an address of the electronic device 101 based on an address of the anchor master device of the second NAN cluster, or reconfiguring of **ID** information of the NAN cluster of the electronic device 101.

According to various embodiments, the electronic device 101 may determine not to perform merging of the NAN clusters when it determines that the second NAN cluster is merged into the first NAN cluster. According to one embodiment, the processor 101 may control not to perform a separate operation related to merging the NAN clusters when it determines that the second NAN cluster is merged into the first NAN cluster.

According to various embodiments, the other electronic devices 964 in the first NAN cluster 960 except for the anchor master device 962 may perform merging into the second NAN cluster 970 based on the signal including information related to the second NAN cluster 970 received from the electronic device 101 (e.g., attribute information of the second NAN cluster 970).

According to various embodiments, an electronic device 972 (e.g., the anchor master device) of the second NAN cluster 970 may detect the first NAN cluster 960 through scanning. According to one embodiment, the electronic device 972 of the second NAN cluster 970 may detect the first NAN cluster 960 by receiving a signal 930 (e.g., a discovery beacon) of the first NAN cluster 960) broadcast by the electronic device 101. According to one embodiment, the electronic device 972 of the second NAN cluster 970 may identify (or determine) the merging direction of the first NAN cluster and the second NAN cluster based on the first MC value and the first CG of the first NAN cluster 960 and the second MC value and the second CG of the second NAN cluster 970. For example, the electronic device 972 of the second NAN cluster 970 may update the second CG of the second NAN cluster 970 to a value (e.g., "101") 940 higher than the first CG of the first NAN cluster 960, when the second MC value of the second NAN cluster 970 is greater than the first MC value of the first NAN cluster 960, but the first CG of the first NAN cluster 960 is greater than the second CG of the second NAN cluster 970. The electronic device 972 of the second NAN cluster 970 may determine that the first NAN cluster 960 is merged into the second NAN cluster 970 based on determining that the second MC value and the second CG of the second NAN cluster 970 are greater than the first MC value and the first CG of the first NAN cluster 960.

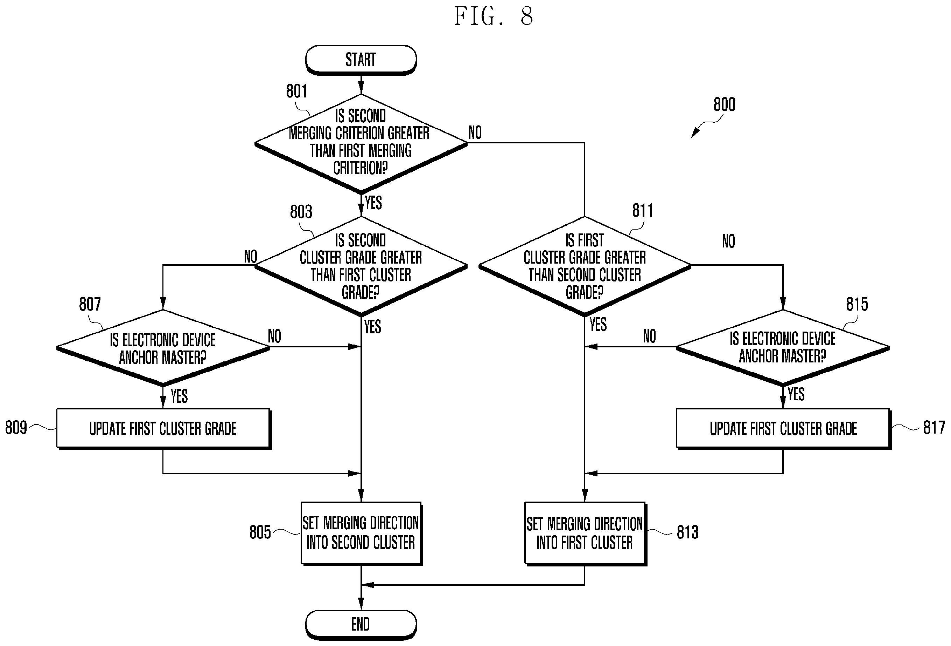

FIG. 8 is a flowchart 800 for configuring a merging direction of NAN clusters in an electronic device according to various embodiments. According to one embodiment, at least a portion of FIG. 8 may include details of operation 709 of FIG. 7. In the following embodiments, the respective operations may be performed sequentially, but is not necessarily performed sequentially. For example, the order of the respective operations may be changed, and at least two operations may be performed in parallel. For example, the electronic device of FIG. 8 may be the electronic device 101 of FIG. 1, FIG. 2, FIG. 3, FIG. 4, FIG. 5A, FIG. 5B, or FIG. 6.

According to various embodiments referring to FIG. 8, in operation 801, an electronic device (e.g., the electronic device 101 of FIG. 1, FIG. 2, FIG. 3, FIG. 4, FIG. 5A, FIG. 5B, or FIG. 6) or a processor (e.g., the processor 120 of FIG. 1 or the processor 600 of FIG. 6) may determine whether a second MC value of a second NAN cluster is greater than a first MC value of a first NAN cluster, when determining the second MC value and/or second CG of the second NAN cluster different from the first NAN cluster including the electronic device 101 (e.g., operation 707 of FIG. 7).

According to various embodiments, in operation 803, when the electronic device (e.g., the electronic device 101) or the processor (e.g., the processor 120 or 600) determines that the second MC value of the second NAN cluster is greater than the first MC value of the first NAN cluster (e.g., "YES" in operation 801), the electronic device or the processor may determine whether the second CG of the second NAN cluster is greater than a first CG of the first NAN cluster.

According to various embodiments, in operation 805, when the electronic device (e.g., the electronic device 101) or the processor (e.g., the processor 120 or 600) determines that the second CG of the second NAN cluster is greater than the first CG of the first NAN cluster (e.g., "YES" in operation 803), the electronic devices included in the first NAN cluster may configure a merging direction of the NAN cluster such that the electronic devices are merged into the second NAN cluster. According to one embodiment, the processor 600 may determine that the first NAN cluster is merged into the second NAN cluster when the second MC value and second CG of the second NAN cluster are greater than the first MC value and first CG of the first NAN cluster.

According to various embodiments, in operation 807, when determining that the second CG of the second NAN cluster is not greater than the first CG of the first NAN cluster (e.g., "NO" of operation 803), the electronic device (e.g., the electronic device 101) or the processor (e.g., the processor 120 or 600) may determine whether the electronic device is configured as an anchor master device within the first NAN cluster. According to one embodiment, when determining that the second CG of the second NAN cluster is less than or equal to the first CG of the first NAN cluster, the processor 600 may determine whether the electronic device is configured as the anchor master device within the first NAN cluster.

According to various embodiments, in operation 805, when the electronic device is not configured as the anchor master device within the first NAN cluster (e.g., "NO" in operation 807), the electronic device (e.g., the electronic device 101) or the processor (e.g., the processor 120 or 600) may configure a merging direction of the NAN cluster such that the electronic devices included in the first NAN cluster are merged into the second NAN cluster. According to one embodiment, the processor 600 may identify (or determine) the merging direction of the first NAN cluster and the second NAN cluster based on the first MC value of the first NAN cluster and the second MC value of the second NAN cluster when the electronic device 101 is not the anchor master device of the first NAN cluster. For example, the processor 600 may determine that the first NAN cluster is merged into the second NAN cluster when the second MC value of the second NAN cluster is greater than the first MC value of the first NAN cluster (e.g., "YES" in operation 801).

According to various embodiments, in operation 809, when the electronic device is configured as the anchor master device within the first NAN cluster (e.g., "YES" in operation 807), the electronic device (e.g., the electronic device 101) or the processor (e.g., the processor 120 or 600) may update the first CG of the first NAN cluster to a value lower than the second CG of the second NAN cluster. As an example, the update of the CG may include a series of operations that modify a master preference (MP) value of the electronic device 101 (e.g., the anchor master device) and/or a random factor value associated with the CG.

According to various embodiments, in operation 805, the electronic device (e.g., electronic device 101) or the processor (e.g., the processor 120 or 600) may configure a merging direction of the NAN cluster such that the electronic devices included in the first NAN cluster are merged into the second NAN cluster. According to one embodiment, the processor 600 may determine that the first NAN cluster is merged into the second NAN cluster when the second MC value and second CG of the second NAN cluster are greater than the first MC value and first CG of the first NAN cluster based on the update of the first CG.

According to various embodiments, in operation 811, when determining that the second MC value of the second NAN cluster is not greater than the first MC value of the first NAN cluster (e.g., "NO" in operation 801), the electronic device (e.g., the electronic device 101) or the processor (e.g., the processor 120 or 600) may determine whether the first CG of the first NAN cluster is greater than the second CG of the second NAN cluster.

According to various embodiments, in operation 813, when determining that the first CG of the first NAN cluster is greater than the second CG of the second NAN cluster (e.g., "YES" in operation 811), the electronic device (e.g., the electronic device 101) or the processor (e.g., the processor 120 or 600) may configure the merging direction of the NAN cluster such that the electronic devices included in the second NAN cluster are merged into the first NAN cluster. According to one embodiment, when the first MC value and first CG of the first NAN cluster are greater than the second MC value and second CG of the second NAN cluster, the processor 600 may determine that the second NAN cluster is merged into the first NAN cluster.

According to various embodiments, in operation 815, when determining that the first CG of the first NAN cluster is not greater than the second CG of the second NAN cluster (e.g., "NO" of operation 811), the electronic device (e.g., the electronic device 101) or the processor (e.g., the processor 120 or 600) may determine whether the electronic device is configured as the anchor master device within the first NAN cluster. According to one embodiment, when determining that the first CG of the first NAN cluster is less than or equal to the second CG of the second NAN cluster, the processor 600 may determine whether the electronic device is configured as the anchor master device within the first NAN cluster.

According to various embodiments, in operation 813, when the electronic device is not configured as the anchor master device within the first NAN cluster (e.g., "NO" in operation 815), the electronic device (e.g., the electronic device 101) or the processor (e.g., the processor 120 or 600) may configure the merging direction of the NAN cluster such that the electronic devices included in the second NAN cluster are merged into the first NAN cluster. According to one embodiment, when the electronic device 101 is not the anchor master device of the first NAN cluster, the processor 600 may identify (or determine) the merging direction of the first NAN cluster and the second NAN cluster based on the first MC value of the first NAN cluster and the second MC value of the second NAN cluster. For example, when the first MC value of the first NAN cluster is greater than the second MC value of the second NAN cluster (e.g., "NO" in operation 801), the processor 600 may determine that the second NAN cluster is merged into the first NAN cluster.

According to various embodiments, in operation 817, when the electronic device is configured as the anchor master device within the first NAN cluster (e.g., "YES" in operation 815), the electronic device (e.g., the electronic device 101) or the processor (e.g., the processor 120 or 600) may update the first CG of the first NAN cluster to a value higher than the second CG of the second NAN cluster. As an example, the update of the CG may include a series of operations that modify a master preference (MP) value of the electronic device 101 (e.g., the anchor master device) and/or a random factor value associated with the CG.

According to various embodiments, in operation 813, the electronic device (e.g., the electronic device 101) or the processor (e.g., the processor 120 or 600) may configure the merging direction of the NAN cluster such that the electronic devices included in the second NAN cluster are merged into the first NAN cluster. According to one embodiment, the processor 600 may determine that the second NAN cluster is merged into the first NAN cluster when the first MC value and first CG of the first NAN cluster are greater than the second MC value and second CG of the second NAN cluster based on the update of the first CG.

According to various embodiments, when the first MC value of the first NAN cluster and the second MC value of the second NAN cluster are the same, the electronic device 101 may compare the first CG of the first NAN cluster and the second CG of the second NAN cluster. According to one embodiment, when it is determined that the first CG of the first NAN cluster is greater than the second CG of the second NAN cluster while the first MC value of the first NAN cluster and the second MC value of the second NAN cluster are the same, the electronic device 101 may configure the merging direction of the NAN cluster such that the electronic devices included in the second NAN cluster are merged into the first NAN cluster.

According to one embodiment, when it is determined that the second CG of the second NAN cluster is greater than the first CG of the first NAN cluster while the first MC value of the first NAN cluster and the second MC value of the second NAN cluster are the same, the electronic device 101 may configure the merging direction of the NAN cluster such that the electronic devices included in the first NAN cluster are merged into the second NAN cluster.

According to one embodiment, when the first MC value of the first NAN cluster and the second MC value of the second NAN cluster and the first CG of the first NAN cluster and the second CG of the second NAN cluster are the same, the electronic device 101 may configure the merging direction of the NAN cluster based on an anchor master rank (AMR) of the first cluster and the second cluster. For example, when it is determined that a first AMR of the first NAN cluster is greater than a second AMR of the second NAN cluster, the electronic device 101 may configure the merging direction of the NAN cluster such that the electronic devices included in the second NAN cluster are merged into the first NAN cluster. For example, when it is determined that the second AMR of the second NAN cluster is greater than the first AMR of the first NAN cluster, the electronic device 101 may configure the merging direction of the NAN cluster such that the electronic devices included in the first NAN cluster are merged into the second NAN cluster. For example, the AMR may be configured based on a master preference (MP), a random factor value, and a MAC address.

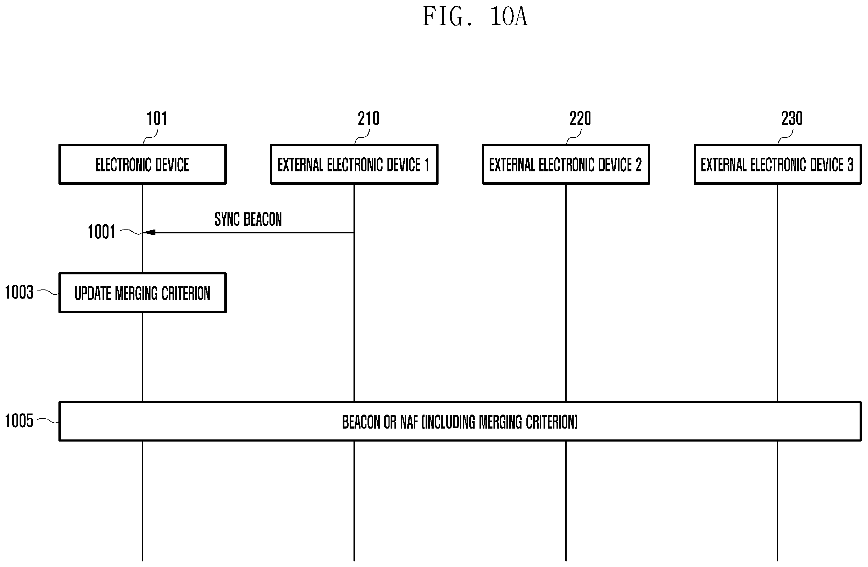

FIG. 10A is a diagram illustrating an example for sharing a merging criterion value in an electronic device according to various embodiments.

According to various embodiments referring to FIG. 10A, the electronic device 101, the external electronic device 2 220, and/or the external electronic device 3 230 may be included in one NAN cluster (e.g., the NAN cluster 200 of FIG. 2 or the first NAN cluster 510 of FIG. 5A). The electronic devices 101, 220, and/or 230 included in one NAN cluster may operate according to a synchronized time clock.

According to various embodiments, the electronic device 101, the external electronic device 2 220, and/or the external electronic device 3 230 may transmit and/or receive various signals (e.g., a beacon signal and/or a sync signal) during a promised discovery window (e.g., the discovery window 450 of FIG. 4) in the NAN cluster.

According to various embodiments, in operation 1001, the electronic device 101 (e.g., the anchor master device) may identify the external electronic device 1 210 newly added to the NAN cluster based on the signal (e.g., a sync beacon) received during the discovery window (e.g., the discovery window 450 of FIG. 4). According to one embodiment, the electronic device 101 may determine that the external electronic device 1 210 is newly added to the NAN cluster when an address other than an address synchronized in the NAN cluster is identified in the signal (e.g., a sync beacon) received during the discovery window.

According to various embodiments, in operation 1003, the electronic device 101 may update a MC value of the NAN cluster based on the determination that the external electronic device 1 210 is newly added to the NAN cluster.

According to various embodiments, in operation 1005, the electronic device 101 may transmit a signal (e.g., a beacon or NAF) including information related to the updated MC value to other electronic devices included in the NAN cluster (e.g., the external electronic device 1 210, the external electronic device 2 220, and/or the external electronic device 3 230). For example, the information related to the updated MC value may be transmitted to the other electronic devices (e.g., the external electronic device 1 210, the external electronic device 2 220, and/or the external electronic device 3 230) through the sync beacon or NAF of the discovery window.

According to various embodiments, the electronic device 101 may determine that the external electronic device 1 210 is newly added to the NAN cluster based on a signal (e.g., a discovery beacon) received from the external electronic device 1 210 in an interval other than the discovery window. The electronic device 101 may update the MC value of the NAN cluster based on the determination that the external electronic device 1 210 has been newly added to the NAN cluster.

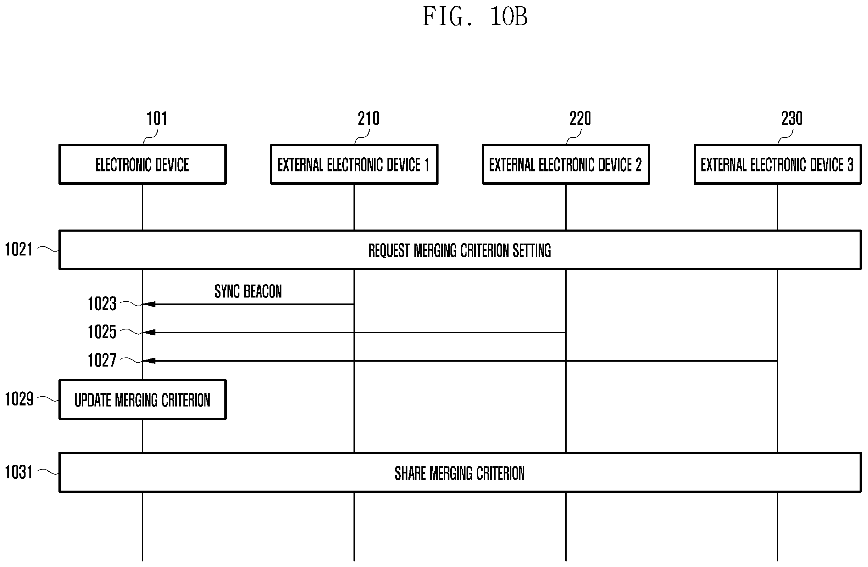

FIG. 10B is a diagram illustrating an example for sharing a merge reference value in an electronic device according to various embodiments.

According to various embodiments referring to FIG. 10B, the electronic device 101, the external electronic device 1 210, the external electronic device 2 220, and/or the external electronic device 3 230 may be included in one NAN cluster (e.g., the NAN cluster 200 of FIG. 2 or the first NAN cluster 510 of FIG. 5A). The electronic devices 101, 210, 220, and/or 230 included in one NAN cluster may operate according to a synchronized time clock.

According to various embodiments, in operation 1021, the electronic device 101 (e.g., the anchor master device) may transmit information related to configuring of a MC to electronic devices included in the NAN cluster (e.g., the external electronic device 1 210, the external electronic device 2 220, and/or the external electronic device 3 230) based on the occurrence of an event of configuring the MC. For example, the information related to configuring of the MC may be transmitted (or broadcast) by being included in an SDF of a discovery window. For example, the event of configuring the MC may be generated based on at least one of a designated period, execution of a function or application program related to NAN communication, user input related to NAN communication, or reception of a control signal from an external electronic device related to NAN communication.

According to various embodiments, in operations 1023, 1025, and/or operation 1027, the external electronic device 1 210, the external electronic device 2 220, and/or the external electronic device 3 230 may transmit a response signal corresponding to the information related to configuring of the MC received from the electronic device 100, to the electronic device 101. For example, the response signal corresponding to the information related to configuring of the MC may be transmitted (or broadcast) by being included in an SDF of the discovery window.

According to various embodiments, in operation 1029, the electronic device 101 may update a MC value of the NAN cluster based on the response signal corresponding to the information related to configuring of the MC. According to one embodiment, the electronic device 101 may increase the MC value of the NAN cluster when a newly added external electronic device is identified in the NAN cluster based on the response signal corresponding to the information related to configuring of the MC. According to one embodiment, the electronic device 101 may decrease the MC value of the NAN cluster when an external electronic device outside the NAN cluster is identified based on the response signal corresponding to the information related to configuring of the MC. According to one embodiment, when there is no response signal corresponding to the information related to configuring of the MC, the electronic device 101 may determine that there is no external electronic device present in the NAN cluster, and update the MC value of the NAN cluster to a minimum value (e.g., about "0" or about "1").

According to various embodiments, in operation 1031, the electronic device 101 may transmit a signal (e.g., a beacon or a NAF) including information related to the updated MC value to the other electronic devices included in the NAN cluster (e.g., the external electronic device 1 210, the external electronic device 2 220, and/or the external electronic device 3 230). For example, the information related to the updated MC value may be transmitted to the other electronic devices (e.g., the external electronic device 1 210, the external electronic device 2 220, and/or the external electronic device 3 230) via a synchronization beacon or NAF of the discovery window.

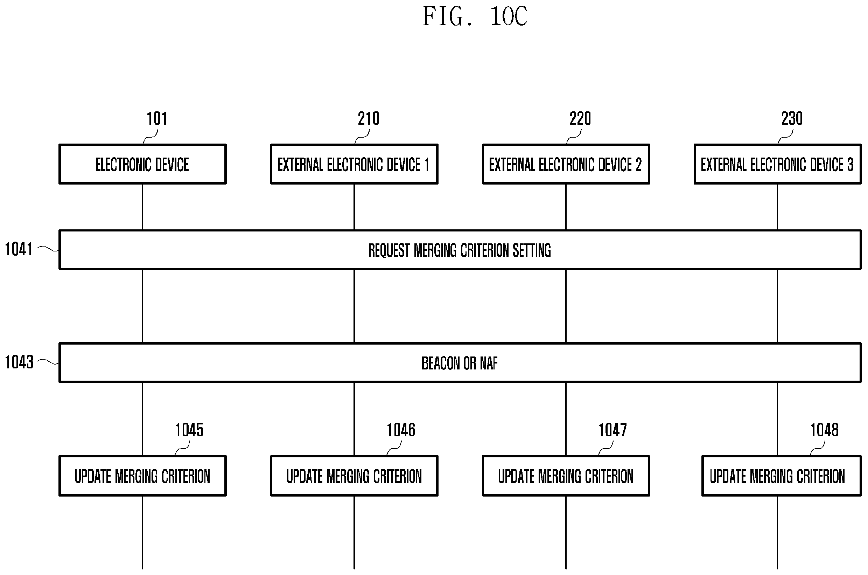

FIG. 10C is a diagram illustrating an example for sharing a merge reference value in an electronic device according to various embodiments.

According to various embodiments referring to FIG. 10C, the electronic device 101, the external electronic device 1 210, the external electronic device 2 220, and/or the external electronic device 3 230 may be included in one NAN cluster (e.g., the NAN cluster 200 of FIG. 2 or the first NAN cluster 510 of FIG. 5A). The electronic devices 101, 210, 220, and/or 230 included in one NAN cluster may operate according to a synchronized time clock.

According to various embodiments, in operation 1041, the electronic device 101 (e.g., an anchor master device) may transmit information related to configuring of a MC to the electronic devices included in the NAN cluster (e.g., the external electronic device 1 210, the external electronic device 2 220, and/or the external electronic device 3 230) based on the occurrence of an event of configuring the MC. For example, the information related to configuring of the MC may be transmitted (or broadcast) by being included in an SDF of a discovery window. For example, the event of configuring the MC may be generated based on at least one of a designated period, execution of a function or application program related to NAN communication, user input related to NAN communication, or reception of a control signal from an external electronic device related to NAN communication.

According to various embodiments, in operation 1043, the external electronic device 1 210, the external electronic device 2 220, and/or the external electronic device 3 230 may broadcast information related to configuring of the MC related to each external electronic device based on the information related to configuring of the MC received from the electronic device 101. For example, the information related to configuring of the MC is information provided to allow the presence of the electronic device transmitting the information related to configuring of the MC of the electronic devices included in the NAN cluster to be recognized, and may be transmitted (or broadcast) by being included in a beacon, an SDF, and/or an NAF of the discovery window.

According to various embodiments, in operation 1045, operation 1046, or/and operation 1048, the electronic device 101, the external electronic device 1 210, the external electronic device 2 220, and/or the external electronic device 3 230 included in the NAN cluster may update a MC value of the NAN cluster based on the information related to configuring of the MC.

According to various embodiments, the electronic device 101 may initialize a bloom filter of the electronic device 101 based on the occurrence of an update event. The electronic device 101 may newly record (or store), in the bloom filter, information related to NMI or NDI received from external electronic devices for a designated period of time based on the initialization of the bloom filter. The electronic device 101 may also update (or generate) the MC value of the NAN cluster based on the newly recorded (or stored) information in the bloom filter based on the initialization of the bloom filter. For example, the update event may be generated based on at least one of a designated period, user input related to the update of the bloom filter, or the reception of a control signal from an external electronic device related to the update of the bloom filter.

According to various embodiments, an operation method of an electronic device (e.g., the electronic device 101 of FIG. 1, FIG. 2, FIG. 3, FIG. 4, FIG. 5A, FIG. 5B, or FIG. 6) may include forming a first NAN cluster (e.g., the NAN cluster 200 of FIG. 2, the first NAN cluster 510 of FIG. 5A or FIG. 5B, or the first NAN cluster 960 of FIG. 9) with at least one first external electronic device. According to one embodiment, the operation method of the electronic device may include identifying a second merging criterion (MC) value and second cluster grade (CG) of a second NAN cluster based on discovery of the second NAN cluster (e.g., the NAN cluster 200 of FIG. 2, the second NAN cluster 520 of FIG. 5A or FIG. 5B, or the second NAN cluster 970 of FIG. 9) that is different from the first NAN cluster. According to one embodiment, the operation method of the electronic device may include updating a first CG of the first NAN cluster based on the second MC value and a first MC value of the first NAN cluster. According to one embodiment, the operation method of the electronic device may include identifying a merging direction of the first NAN cluster and the second NAN cluster based on the first MC value, the second MC value, the updated first CG, and/or the second CG.

According to various embodiments, the first MC value may be configured based on at least one of a cluster size of the first NAN cluster, the number of NAN data paths (NDPs) activated within the first NAN cluster, or the number of NAN data links (NDLs) activated within the first NAN cluster.

According to various embodiments, the second MC value may be configured based on at least one of a cluster size of the second NAN cluster, the number of NDPs activated within the second NAN cluster, or the number of NDLs activated within the second NAN cluster.

According to various embodiments, the at least one of the cluster size of the first NAN cluster, the number of NDPs activated within the first NAN cluster, or the number of NDLs activated within the first NAN cluster may be identified based on information stored in a bloom filter of the electronic device.

According to various embodiments, the operation method of the electronic device may include further identifying the second NAN cluster based on a signal of at least one second external electronic device included in the second NAN cluster received through scanning during an interval other than a discovery window (DW) of the first NAN cluster.

According to various embodiments, the updating of the first CG may include updating the first CG to be less than the second CG when the second MC value is greater than the first MC value and the first CG is greater than the second CG.

According to various embodiments, the updating of the first CG may include updating the first CG to be greater than the second CG when the first MC value is greater than the second MC value and the second CG is greater than the first CG.

According to various embodiments, the updating of the first CG may include updating the first CG by updating at least one of a master preference value of an anchor mister device of the first NAN cluster or a random factor value associated with configuring of the first CG.

According to various embodiments, the identifying of the merging direction may include configuring the merging direction such that the first NAN cluster is merged into the second NAN cluster when the second MC value is greater than the first MC value and the second CG is greater than the updated first CG.

According to various embodiments, the operation method of the electronic device may further include transmitting information related to the second NAN cluster to at least one first external electronic device included in the first NAN cluster based on a determination that the first NAN cluster is merged into the second NAN cluster when the electronic device is an anchor master device of the first NAN cluster, and performing synchronization with the second NAN cluster.

According to various embodiments, the identifying of the merge direction may include configuring the merging direction such that the second NAN cluster is merged into the first NAN cluster when the first MC value is greater than the second MC value and the updated first CG is greater than the second CG.

The embodiments of the present invention disclosed in this specification and drawings are merely specific examples presented to easily explain the technical contents according to the embodiments of the present invention and to help understand the embodiments of the present invention, and are not intended to limit the scope of the embodiments of the present invention. Therefore, the scope of the various embodiments of the present invention should be interpreted as including all changes or modified forms derived based on the technical ideas of the various embodiments of the present invention in addition to the embodiments disclosed herein.

## Claims

1. An electronic device comprising:

   a communication circuit; and
   a processor operatively connected to the communication circuit,
   wherein the processor is configured to:

   form a first neighbor awareness network (NAN) cluster with at least one first external electronic device;
   identify a second merging criterion value and second cluster grade of a second NAN cluster that is different from the first NAN cluster, based on discovery of the second NAN cluster;
   update a first cluster grade of the first NAN cluster based on the second merging criterion value and a first merging criterion value of the first NAN cluster; and
   identify a merging direction of the first NAN cluster and the second NAN cluster based on the first merging criterion value, the second merging criterion value, the updated first cluster grade, and/or the second cluster grade.

2. The electronic device of claim 1,

wherein the first merging criterion value is configured based on at least one of a cluster size of the first NAN cluster, the number of NAN data paths (NDPs) activated within the first NAN cluster, or the number of NAN data links (NDLs) activated within the first NAN cluster, and wherein the second merging criterion value is configured based on at least one of a cluster size of the second NAN cluster, the number of NDPs activated within the second NAN cluster, or the number of NDLs activated within the second NAN cluster.

3. The electronic device of claim 1, wherein the processor is configured to, in case that the second merging criterion value is greater than the first merging criterion value and the first cluster grade is greater than the second cluster grade, update the first cluster grade to be less than the second cluster grade.

4. The electronic device of claim 1, wherein the processor is configured to, in case that the first merging criterion value is greater than the second merging criterion value and the second cluster grade is greater than the first cluster grade, update the first cluster grade to be greater than the second cluster grade.

5. The electronic device of claim **1,** wherein the processor is configured to update the first cluster grade by updating at least one of a master preference value of an anchor mister device of the first NAN cluster or a random factor value associated with configuring of the first cluster grade.

6. The electronic device of claim 1, wherein the processor is configured to, in case that the second merging criterion value is greater than the first merging criterion value and the second cluster grade is greater than the updated first cluster grade, configure the merging direction such that the first NAN cluster is merged into the second NAN cluster.

7. The electronic device of claim 6, wherein the processor is configured to:

in case that the electronic device is an anchor master device of the first NAN cluster, transmit information related to the second NAN cluster to at least one first extemal electronic device included in the first NAN cluster based on a determination that the first NAN cluster is merged into the second NAN cluster through the communication circuit; and
perform synchronization with the second NAN cluster through the communication circuit.

8. The electronic device of claim 1, wherein the processor is configured to, in case that the first merging criterion value is greater than the second merging criterion value and the updated first cluster grade is greater than the second cluster grade, configure the merging direction such that the second NAN cluster is merged into the first NAN cluster.

9. An operation method of an electronic device, comprising:

forming a first NAN cluster with at least one first extemal electronic device;
identifying a second merging criterion value and second cluster grade of a second NAN cluster based on discovery of the second NAN cluster that is different from the first NAN cluster;
updating a first cluster grade of the first NAN cluster based on the second merging criterion value and a first merging criterion value of the first NAN cluster; and
identifying a merging direction of the first NAN cluster and the second NAN cluster based on the first merging criterion value, the second merging criterion value, the updated first cluster grade, and/or the second cluster grade.

10. The operation method of the electronic device of claim 9,

wherein the first merging criterion value is configured based on at least one of a cluster size of the first NAN cluster, the number of NDPs activated within the first NAN cluster, or the number of NDLs activated within the first NAN cluster, and
wherein the second merging criterion value is configured based on at least one of a cluster size of the second NAN cluster, the number of NDPs activated within the second NAN cluster, or the number of NDLs activated within the second NAN cluster.

11. The operation method of the electronic device of claim 9, wherein the updating of the first cluster grade comprises, in case that the second merging criterion value is greater than the first merging criterion value and the first cluster grade is greater than the second cluster grade, updating the first cluster grade to be less than the second cluster grade.

12. The operation method of the electronic device of claim 9, wherein the updating of the first cluster grade comprises, in case that the first merging criterion value is greater than the second merging criterion value and the second cluster grade is greater than the first cluster grade, updating the first cluster grade to be greater than the second cluster grade.

**13.** The operation method of the electronic device of claim 9, wherein the updating of the first cluster grade comprises updating the first cluster grade by updating at least one of a master preference value of an anchor mister device of the first NAN cluster or a random factor value associated with configuring of the first cluster grade.

**14.** The operation method of the electronic device of claim 9, wherein the identifying of the merging direction comprises, in case that the second merging criterion value is greater than the first merging criterion value and the second cluster grade is greater than the updated first cluster grade, configuring the merging direction such that the first NAN cluster is merged into the second NAN cluster.

**15.** The operation method of the electronic device of claim 9, wherein the identifying of the merging direction, in case that the first merging criterion value is greater than the second merging criterion value and the updated first cluster grade is greater than the second cluster grade, comprises configuring the merging direction such that the second NAN cluster is merged into the first NAN cluster.

# FIG. 1

ELECTRONIC DEVICE 101

INPUT MODULE 150

SOUND OUTPUT MODULE 155

DISPLAY MODULE 160

BATTERY 189

POWER MANAGEMENT MODULE 188

MEMORY 130
VOLATILE MEMORY 132
NON-VOLATILE MEMORY 134
INTERNAL MEMORY 136
EXTERNAL MEMORY 138

PROCESSOR 120
MAIN PROCESSOR 121
AUXILIARY PROCESSOR 123

COMMUNICATION MODULE 190
WIRELESS COMMUNICATION MODULE 192
WIRED COMMUNICATION MODULE 194

SUBSCRIBER IDENTIFICATION MODULE 196

ANTENNA MODULE 197

AUDIO MODULE 170

SENSOR MODULE 176

HAPTIC MODULE 179

CAMERA MODULE 180

INTERFACE 177

CONNECTION TERMINAL 178

PROGRAM 140
APPLICATION 146
MIDDLEWARE 144
OPERATING SYSTEM 142

100

SECOND NETWORK 199

ELECTRONIC DEVICE 104

FIRST NETWORK 198

ELECTRONIC DEVICE 102

SERVER 108

EP 4 590 027 A1

FIG. 2

# FIG. 3

330
NAN Discovery Beacons (ch.6)

310
NAN Devices contend to transmit NAN Sync Beacons (ch.6)

320
NAN Devices contend to transmit NAN Service Discovery frames (ch.6)

330
NAN Discovery Beacons (ch.6)

310
NAN Devices contend to transmit NAN Sync Beacons (ch.6)

320
NAN Devices contend to transmit NAN Service Discovery frames (ch.6)

330
NAN Discovery Beacons (ch.6)

DWStart

DWEnd

DWStart

DWEnd

512 TUs

DW [325]

16 TUs

DW [325]

Interval between DWs (340)

EP 4 590 027 A1

# FIG. 4

101

ELECTRONIC DEVICE

↑ : BEACON AND SDF TRANSMITTED BY FIRST ELECTRONIC DEVICE WITHIN DW

Synchronous

DW

DW
(450)

Interval
(460)

210

220

EXTERNAL ELECTRONIC
DEVICE 1

EXTERNAL ELECTRONIC
DEVICE 2

↑ : ALL ELECTRONIC DEVICES WITHIN CLUSTER RECEIVE BEACON AND SDF OF FIRST ELECTRONIC DEVICE

EP 4 590 027 A1

FIG. 5A

EP 4 590 027 A1

# FIG. 5B

FIRST CLUSTER 510

EXTERNAL ELECTRONIC DEVICE 4 — 521

EXTERNAL ELECTRONIC DEVICE 1 — 210

EXTERNAL ELECTRONIC DEVICE 3 — 230

ELECTRONIC DEVICE — 101

EXTERNAL ELECTRONIC DEVICE 2 — 220

EXTERNAL ELECTRONIC DEVICE 5 — 522

EP 4 590 027 A1

FIG. 6

FIG. 7

700

```
        ┌──────────────┐
        │    START     │
        └──────────────┘
               │
               ▼
   ┌──────────────────────────┐
   │   FORM FIRST NAN CLUSTER  │─── 701
   └──────────────────────────┘
               │
               ▼
   ┌──────────────────────────┐
   │ IDENTIFY FIRST MERGING    │
   │ CRITERION VALUE           │─── 703
   │ AND FIRST CLUSTER GRADE   │
   │ OF FIRST NAN CLUSTER      │
   └──────────────────────────┘
               │
               ▼
   ┌──────────────────────────┐
   │ DETECT SECOND NAN CLUSTER │─── 705
   └──────────────────────────┘
               │
               ▼
   ┌──────────────────────────┐
   │ IDENTIFY SECOND MERGING   │
   │ CRITERION VALUE           │
   │ AND SECOND CLUSTER GRADE  │─── 707
   │ OF SECOND NAN CLUSTER     │
   └──────────────────────────┘
               │
               ▼
   ┌──────────────────────────┐
   │ IDENTIFY MERGING          │─── 709
   │ DIRECTION OF CLUSTER      │
   └──────────────────────────┘
               │
               ▼
   ┌──────────────────────────┐
   │ PERFORM MERGING OF        │
   │ CLUSTER BASED ON MERGING  │─── 711
   │ DIRECTION OF CLUSTER      │
   └──────────────────────────┘
               │
               ▼
        ┌──────────────┐
        │     END      │
        └──────────────┘
```

# FIG. 8

# FIG. 9

EP 4 590 027 A1

FIG. 10A

EP 4 590 027 A1

FIG. 10B

| | 101 | 210 | 220 | 230 |
|---|---|---|---|---|
| | ELECTRONIC DEVICE | EXTERNAL ELECTRONIC DEVICE 1 | EXTERNAL ELECTRONIC DEVICE 2 | EXTERNAL ELECTRONIC DEVICE 3 |

1021 — REQUEST MERGING CRITERION SETTING

1023 — SYNC BEACON

1025

1027

1029 — UPDATE MERGING CRITERION

1031 — SHARE MERGING CRITERION

EP 4 590 027 A1

# FIG. 10C

| 101 | 210 | 220 | 230 |
|---|---|---|---|
| ELECTRONIC DEVICE | EXTERNAL ELECTRONIC DEVICE 1 | EXTERNAL ELECTRONIC DEVICE 2 | EXTERNAL ELECTRONIC DEVICE 3 |

1041 — REQUEST MERGING CRITERION SETTING

1043 — BEACON OR NAF

| 1045 | 1046 | 1047 | 1048 |
|---|---|---|---|
| UPDATE MERGING CRITERION | UPDATE MERGING CRITERION | UPDATE MERGING CRITERION | UPDATE MERGING CRITERION |

EP 4 590 027 A1

## INTERNATIONAL SEARCH REPORT

| International application No. |
|---|
| **PCT/KR2023/017161** |

| A. | CLASSIFICATION OF SUBJECT MATTER |
|---|---|

**H04W 40/32**(2009.01)i; **H04W 48/16**(2009.01)i; **H04W 84/12**(2009.01)i; **H04W 84/18**(2009.01)i

According to International Patent Classification (IPC) or to both national classification and IPC

| B. | FIELDS SEARCHED |
|---|---|

Minimum documentation searched (classification system followed by classification symbols)

H04W 40/32(2009.01); H04W 4/80(2018.01); H04W 56/00(2009.01); H04W 8/00(2009.01); H04W 8/18(2009.01); H04W 84/20(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NAN(neighbor awareness network), cluster, merging criteria(MC), count, NDP(NAN data path), NDL(NAN data link), size, cluster grade(CG), master preference, TSF(time synchronization function), update

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2017-057988 A1 (LG ELECTRONICS INC.) 06 April 2017 (2017-04-06)<br>See paragraph [0171]; claim 1; and figures 16-17. | 1-2,9-10 |
| A | | 3-8,11-15 |
| Y | KR 10-2021-0053532 A (SAMSUNG ELECTRONICS CO., LTD.) 12 May 2021 (2021-05-12)<br>See paragraphs [0075] and [0116]; and figures 5 and 8. | 1-2,9-10 |
| A | US 9258193 B2 (NOKIA CORPORATION) 09 February 2016 (2016-02-09)<br>See column 25, line 64 - column 34, line 17; and figures 8-12. | 1-15 |
| A | KR 10-2018-0126050 A (HUAWEI TECHNOLOGIES CO., LTD.) 26 November 2018 (2018-11-26)<br>See paragraphs [0095]-[0185]; and figures 3-10. | 1-15 |
| A | KR 10-2016-0086370 A (QUALCOMM INCORPORATED) 19 July 2016 (2016-07-19)<br>See paragraphs [0050]-[0060]; and figures 5-7. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 January 2024** | **31 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/017161**

| Patent document cited in search report | | | Publication date (day/month/year) | Patent family member(s) | | | Publication date (day/month/year) |
|---|---|---|---|---|---|---|---|
| WO | 2017-057988 | A1 | 06 April 2017 | None | | | |
| KR | 10-2021-0053532 | A | 12 May 2021 | US | 2022-0264282 | A1 | 18 August 2022 |
| | | | | WO | 2021-091175 | A1 | 14 May 2021 |
| US | 9258193 | B2 | 09 February 2016 | CN | 104780510 | A | 15 July 2015 |
| | | | | EP | 2894935 | A1 | 15 July 2015 |
| | | | | US | 2015-0200811 | A1 | 16 July 2015 |
| KR | 10-2018-0126050 | A | 26 November 2018 | CN | 108605300 | A | 28 September 2018 |
| | | | | EP | 3429283 | A1 | 16 January 2019 |
| | | | | EP | 3429283 | A4 | 06 March 2019 |
| | | | | US | 11140644 | B2 | 05 October 2021 |
| | | | | US | 2019-0124611 | A1 | 25 April 2019 |
| | | | | WO | 2017-166032 | A1 | 05 October 2017 |
| KR | 10-2016-0086370 | A | 19 July 2016 | CN | 105723758 | A | 29 June 2016 |
| | | | | EP | 3069542 | A1 | 21 September 2016 |
| | | | | JP | 2017-501615 | A | 12 January 2017 |
| | | | | JP | 6434018 | B2 | 05 December 2018 |
| | | | | US | 2015-0131529 | A1 | 14 May 2015 |
| | | | | WO | 2015-073676 | A1 | 21 May 2015 |

Form PCT/ISA/210 (patent family annex) (July 2022)